# EUROPÄISCHE PATENTSCHRIFT

(11) **EP 3 212 953 B1**
(45) Veröffentlichungstag und Bekanntmachung des Hinweises auf die Patenterteilung: **09.12.2020**
(21) Anmeldenummer: 15778342.4
(22) Anmeldetag: 13.10.2015
(51) Int. Cl.: F16D 21/00, F16D 48/06

(54) **VERFAHREN ZUR ADAPTION DES KISSPOINTS ZUMINDEST EINER DER KUPPLUNGEN EINER DOPPELKUPPLUNG EINES DOPPELKUPPLUNGSGETRIEBES EINES KRAFTFAHRZEUGES, INSBESONDERE DER DOPPELKUPPLUNG EINES AUTOMATISIERTEN DOPPELKUPPLUNGSGETRIEBES**
METHOD FOR ADAPTING THE KISS POINT OF AT LEAST ONE OF THE CLUTCHES OF A DOUBLE CLUTCH OF A DOUBLE CLUTCH TRANSMISSION OF A MOTOR VEHICLE, IN PARTICULAR THE DOUBLE CLUTCH OF AN AUTOMATED DOUBLE CLUTCH TRANSMISSION
PROCÉDÉ D'ADAPTATION DU POINT DE CONTACT D'AU MOINS UN DES EMBRAYAGES D'UN DOUBLE EMBRAYAGE D'UNE TRANSMISSION À DOUBLE EMBRAYAGE D'UN VÉHICULE AUTOMOBILE, EN PARTICULIER DU DOUBLE EMBRAYAGE D'UNE TRANSMISSION AUTOMATIQUE À DOUBLE EMBRAYAGE

(30) Priorität: 31.10.2014 DE 102014222262
(43) Veröffentlichungstag der Anmeldung: 06.09.2017
(73) Patentinhaber: Volkswagen Aktiengesellschaft, 38440 Wolfsburg (DE)
(72) Erfinder: WALLEK, Volker, 38126 Braunschweig (DE); SALEWSKY, Stefan, 38116 Braunschweig (DE); SCHNEEGANS, André, 31234 Edemissen (DE)
(86) Internationale Anmeldenummer: PCT/EP2015/073608
(87) Internationale Veröffentlichungsnummer: WO 2016/066418

(56) Entgegenhaltungen:
- EP-A2- 1 998 064
- WO-A1-2009/065458
- DE-A1-102007 025 253
- DE-A1-102011 016 576
- DE-A1-102012 209 869

## Beschreibung

Die Erfindung betrifft ein Verfahren zur Adaption des Kisspointes zumindest einer der Kupplungen einer Doppelkupplung eines Doppelkupplungsgetriebes eines Kraftfahrzeuges, insbesondere der Doppelkupplung eines automatisierten Doppelkupplungsgetriebes gemäß den Merkmalen des Oberbegriffes des Patentanspruches 1.

Im Stand der Technik sind verschiedene Verfahren zur Adaption des "Kisspoints" von Kupplungen bekannt. Unter dem "Kisspoint" einer Kupplung ist im Wesentlichen der Betriebspunkt einer Kupplung gemeint, bei dem die Reibelemente einer Kupplung sich berühren und ein bestimmtes Drehmoment auf eine Getriebeeingangswelle mit Hilfe dieser Kupplung übertragbar ist. Da die Reibflächen von Kupplungen im laufenden Betrieb des Kraftfahrzeuges entsprechend verschleißen, muss der Einrückweg einer Kupplung bzw. der sogenannte "Kisspoint", bei dem die in Kontakt kommenden Reibelemente dann ein bestimmtes Drehmoment übertragen sollen, von Zeit zu Zeit immer entsprechend adaptiert werden. Hier sind zwar bereits unterschiedliche Adaptionsverfahren bekannt, allerdings steigen die Anforderungen an derartige Adaptionsverfahren bzw. an Kupplungskennlinienadaptionsverfahren, insbesondere die Anforderungen an die Kisspointadaption an, da insbesondere aufgrund des sehr hohen "Stop- and Go-Anteils" bei Fahrzyklen in sogenannten "Mega-Cities" sich in relativ kurzer Zeit ein hoher Verschleiß an den Reibelementen/Reibflächen einer Kupplung einstellen kann, wodurch dann der Fahrkomfort vermindert wird. Der "Kisspoint" ist daher auch ein essentieller Kennlinienpunkt, wobei die Adaptionsqualität maßgeblich den Anfahr- und Schaltkomfort des Kraftfahrzeugs beeinflusst.

Bei den aktuell im Stand der Technik bekannten Adaptionsverfahren werden insbesondere aufgrund von zeitlich geringen Konstant-Fahranteilen der Kraftfahrzeuge, sowie aufgrund von jeweiligen länderspezifischen Fahrweisen (der dortigen Benutzer) auch häufig die derzeit im Stand der Technik bisher geltenden Adaptionsbedingungen verletzt bzw. nicht erfüllt, so dass die entsprechende Adaption erst gar nicht durchgeführt und/oder gar nicht gestartet wird oder sogar abgebrochen werden muss. Dies kann dazu führen, dass über längere Laufstrecken bzw. über längere Betriebszeiten des Kraftfahrzeugs auch keine Kisspointadaption mehr durchgeführt wird. Nicht nur der übliche Verschleiß einer Trockenkupplung, sondern auch spezifische Umwelteinflüsse können hier die Kisspointposition einer Trockenkupplung maßgeblich beeinflussen. Schließlich sind die aktuell im Stand der Technik bekannten Verfahren insbesondere auch von der Genauigkeit des jeweiligen Motormomentes abhängig. Daher kann es bei sogenannten "Offsetfehlern im Motormoment" (bei schlechter Kraftstoffqualität, bei einer Höhenkompensation usw.) auch daher zu einer nicht ganz korrekten bzw. zu einer ungenauen Kisspointadaption kommen. Vor allem aber in einem "Stop-and Go-Betrieb" des Kraftfahrzeugs tritt ein hoher Kupplungsverschleiß und treten hohe Kupplungstemperaturen auf, so dass für diese Fälle, also insbesondere im "Stop- and Go-Betrieb" auch eine regelmäßige und möglichst zuverlässige Kupplungsadaption bzw. Kisspointadaption dringend erforderlich bzw. wünschenswert ist, damit ein bestimmter Fahrzeugkomfort für den Benutzer des Kraftfahrzeugs dann auch gewährleistet ist.

So wird in der DE 102 61 723 A1 ein Adaptionsverfahren zur Adaption der Schaltkennlinie einer Lastschaltkupplung eines Doppelkupplungsgetriebes beschrieben, wobei im Doppelkupplungsgetriebe bestimmte Gangstufen nun so eingelegt werden, so dass die erste und zweite Getriebeeingangswelle miteinander drehwirksam verbunden sind. Hierbei wird dann die Drehmomentveränderung der aktiven Lastschaltkupplung erfasst und zur Bestimmung der aktuellen Schaltkennlinie der passiven Lastschaltkupplung verwendet. Die Adaption der passiven Lastschaltkupplung erfolgt daher mit Hilfe einer Erfassung der Drehmomentveränderung der aktiven Lastschaltkupplung unter bestimmten Bedingungen.

In der DE 196 52 244 A1 wird ein Adaptionsverfahren offenbart, wobei im Stand des Kraftfahrzeuges bei eingelegtem Gang zwei definierte Kupplungsmomente angelegt und die daraus resultierenden Motormomente gespeichert werden. Durch Vergleich der entsprechenden Differenz der Motormomente zu der angelegten Differenz der Kupplungsmomente wird die jeweilige Kisspoint inkrementell nach oben oder nach unten verschoben. Bei diesem Adaptionsverfahren dient daher das jeweilige Motormoment als wichtiger Parameter, so dass der Kisspoint in Abhängigkeit der Motormomentengenauigkeit des Motors eingestellt wird. Insbesondere sind die Adaptionszeiten hier auch größer als 4 Sekunden, so dass dieses bekannte Adaptionsverfahren für den Einsatz in den sogenannten "Mega-Cities" ungeeignet ist. Weiterhin wird die Adaption auch nur im Stand des Kraftfahrzeuges mit betätigter Bremse realisiert.

So ist aus der DE 103 08 517 A1 ein weiteres Verfahren zur Kupplungskennlinienadaption bei einem automatisierten Doppelkupplungsgetriebe bekannt, wobei hier der Kisspoint der zu adaptierenden Kupplung ermittelt wird, indem die Drehzahl der freien Getriebeeingangswelle auf die Motordrehzahl hochgezogen wird und dann eine der dem freien Teilgetriebe zugeordnete Synchronisiervorrichtung mit einer zunehmenden Synchronisierkraft zugestellt wird. Bei einem bestimmten Wert der Synchronisierkraft löst sich dann die Drehzahl der freien Getriebeeingangswelle von der Motordrehzahl entsprechend ab, wobei mit Hilfe des Wertes der Kupplungsstellgröße und des ermittelten Wertes der entsprechenden Synchronisierstellgröße der Kisspoint der Kupplung adaptiert wird.

Weiterhin ist aus der DE 199 31 160 A1 ein Adaptionsverfahren zur Kupplungskennlinienadaption eines automatisierten Doppelkupplungsgetriebes bekannt, wobei eine definierte Kupplungsstellkraft erzeugt wird, eine dem freien Teilgetriebe zugeordnete Synchronisiervorrichtung betätigt wird und nach dem Lösen der betätigten Synchronisiervorrichtung ein Drehzahlgradient der freien Getriebeeingangswelle ermittelt wird und wobei dann das Drehmoment der der freien Getriebeeingangswelle zugeordneten Kupplung ermittelt wird, um so dann die Kupplungskennlinie entsprechend zu adaptieren.

Die DE 10 2008 030 033 B4 beschreibt ein Verfahren zur Adaption eines Kisspointes einer Kupplung, wobei die freie Getriebeeingangswelle auf die Motordrehzahl gebracht wird. Anschließend wird die Kupplung wieder gelöst und mit Hilfe des Gangstellers bzw. einer Synchronisiervorrichtung wird eine definierte Synchronkraft aufgebracht, um die passive/freie Getriebeeingangswelle auf das Synchrondrehzahl-Niveau des ansynchronisierten Ganges zu beschleunigen, hierbei wird der entsprechende Drehzahlgradient der Getriebeeingangswelle bestimmt. Das gleiche Verfahren wird noch einmal mit leicht angelegter Kupplung durchgeführt. Wenn am adaptierten Kisspoint zu viel Drehmoment abgenommen wird, wird sich ein geringer Drehzahlgradient einstellen und der Kisspoint wird dann in Richtung "offen" verschoben. Für den Fall, dass sich der gleiche Drehzahlgradient einstellt muss der Kisspoint in Richtung "geschlossen" verschoben werden. Jedenfalls wird der Kisspoint als Funktion der Differenz der beiden oben beschriebenen Drehzahlgradienten unter spezifischen Bedingungen bestimmt. Das hier beschriebene Verfahren ist sehr zeitaufwändig, da ein zweimaliges Ansynchronisieren notwendig ist. Zudem kann auch nicht sichergestellt werden, dass der Gangsteller bzw. die Synchronisiervorrichtung immer auch exakt die gleiche Synchronkraft aufbringt.

Aus der WO 2009/065458 A1 ist ein Verfahren zur Adaption eines Kisspoints bei einer Reibkupplung eines Stufengetriebes für ein Kraftfahrzeug bekannt, wobei die Reibkupplung und eine Synchronisiervorrichtung gleichzeitig geschlossen werden. Hierbei wird die Synchronisiervorrichtung auch bei geschlossener Reibkupplung eingerückt, wodurch die Synchronisiervorrichtung insbesondere auch gegen die Reibkupplung arbeitet, was zu einem erhöhten Verschleiß führt.

In der DE 10 2007 025 253 A1 wird der Eingriffspunkt einer Kupplung ermittelt, wobei mit Hilfe einer Synchronisiervorrichtung eine vorgegebene Synchronisierkraft zum Ansynchronisieren eines Ganges aufgebracht wird und dann vorgegebene Differenzdrehzahlen zwischen der Drehzahl der freien Getriebewelle und der Antriebsdrehzahl bzw. Motordrehzahl verglichen werden. Ein ähnliches Verfahren wird auch in der DE 10 2011 016 576 A1 beschrieben.

Schließlich ist aus der DE 102007 013 495 A1 ein Adaptionsverfahren für eine Reibungskupplung eines automatisierten Doppelkupplungsgetriebes bekannt, bei dem die Motordrehzahlen und die Drehzahlen der freien Getriebeeingangswelle des freien Teilgetriebes erfasst werden. Die Kupplung wird hier sukzessiv eingerückt bis eine Veränderung der Drehzahl der Getriebeeingangswelle in Richtung der Motordrehzahl festgestellt wird, wobei ein entsprechender Stellparameter bezüglich des Einrückungsgrades der Kupplung bestimmt wird. Die Berechnung des tatsächlichen, aktuellen Berührungspunktes (Kisspoint) der Kupplung erfolgt aber durch die Subtraktion eines Offsetwertes von dem festgelegten Stellparameter. Da die Signalerfassung, Signalübertragung sowie die Signalverarbeitung eine gewisse Zeit in Anspruch nimmt, wird der entsprechende Einrückweg der Kupplung so korrigiert, um den tatsächlichen Berührungspunkt/Kisspoint auch möglichst exakt zu ermitteln.

Bei dem obigen zuletzt genannten Verfahren (DE 10 2007 013 495 A1), von dem die Erfindung im Wesentlichen ausgeht, werden daher die Motordrehzahl und die Drehzahl der dem freien Teilgetriebe zugeordnete Getriebeeingangswelle entsprechend erfasst bzw. ermittelt. Von Nachteil ist aber, dass beispielsweise temporär im Getriebe wirksame Schleppmomente, die beispielsweise verursacht werden können durch die Reibelemente der dem freien Teilgetriebe zugeordneten Synchronisiereinrichtungen oder auch kupplungsbedingte Schleppmomente, also im Endeffekt entsprechende "Störgrößen" nicht berücksichtigt bzw. nicht ermittelt werden. Der dortige Kisspoint wird daher im Wesentlichen nur durch die absolute Drehzahländerung der Getriebeeingangswelle der zu adaptierenden Kupplung bestimmt, so dass aufgrund variierender "Getriebe-Schleppmomente" es zu einer nur ungenau realisierten Kisspoint-Adaption kommt.

Der Erfindung liegt daher die Aufgabe zugrunde, das oben genannte Verfahren, von dem die Erfindung ausgeht, nun derart auszugestalten und weiterzubilden, dass die Genauigkeit der Bestimmung des Kisspointes erhöht ist, insbesondere das Verfahren auch während der Fahrt des Kraftfahrzeuges durchgeführt werden kann und für den "Stop-and-Go-Betrieb", insbesondere auch in sogenannten Mega-Cities geeignet ist.

Die zuvor aufgezeigte Aufgabe ist nun zunächst durch die Merkmale des Patentanspruches 1 gelöst. Die dem freien
Teilgetriebe zugeordneten Gänge und/oder die dem freien Teilgetriebe zugeordneten Synchronisiervorrichtungen werden ausgelegt bzw. geöffnet, wobei danach zunächst eine Ermittlung und/oder Bewertung der auf die Getriebeeingangswelle möglicherweise beschleunigend oder verzögernd einwirkenden Schleppmomente erfolgt. Damit erfolgt nun eine Ermittlung und/oder Bewertung der auf die freie Getriebeeingangswelle einwirkenden Schleppmomente, insbesondere eine Ermittlung oder Bewertung eines möglicherweise existierenden Kupplungsschleppmomentes oder eines möglicherweise existierenden Synchronschleppmomentes. Der Begriff "Ermittlung" umfasst daher insbesondere auch den Verfahrensschritt der Überprüfung, ob ein entsprechendes Schleppmoment vorliegt (oder auch eben nicht vorliegt). Damit erfolgt die Adaption auch - wenn derartige Schleppmomente vorhanden sind - unter Berücksichtigung eines möglicherweise existierenden Kupplungsschleppmomentes oder eines möglicherweise existierenden Synchronschleppmomentes. Insbesondere werden die Drehzahlgradienten der freien Getriebeeingangswelle, der Motordrehzahlgradient der Motorwelle und der Synchrondrehzahlgradient ermittelt und/oder erfasst und entsprechend miteinander verglichen, um ein möglicherweise existierendes Kupplungsschleppmoment oder ein Synchronschleppmoment zu ermitteln bzw. zu detektieren. Auch wird die relative Lage der Drehzahl der Getriebeeingangswelle zur Motordrehzahl und/oder zur wenigstens einer Synchrondrehzahl erfasst und/oder ermittelt. Die Synchrondrehzahl ist eine Drehzahl, die die Getriebeeingangswelle des freien Teilgetriebes hätte, wenn eine der Synchronisiervorrichtungen eingelegt würde d. h. wenn in dem freien Teilgetriebe ein Gang eingelegt wurde. Jedem Gang des Teilgetriebes entspricht in einem Zeitpunkt natürlich eine andere Synchrondrehzahl, die abhängig von der Übersetzung des jeweiligen Ganges und der Abtriebswellendrehzahl ist. Es wird darauf hingewiesen, dass die Synchrondrehzahl nicht identisch mit der Drehzahl der zugehörigen Synchronisiervorrichtung sein muss, weil die Synchronisiervorrichtung nicht unbedingt auf der Getriebeeingangswelle, sondern auch auf der Triebwelle angeordnet werden kann. Es wird dann eine "Positionierungsstrategie" realisiert, nämlich bei der Ermittlung bzw. des Vorliegens eines Synchronschleppmomentes oder eines Kupplungsschleppmomentes wird vor dem Beginn des Adaptionsvorganges die Drehzahl der Getriebeeingangswelle, falls notwendig, gezielt positioniert. Hierbei hat die Positionierungsstrategie zum Ziel, dass die der zu adaptierenden Kupplung zugeordnete Getriebeeingangswelle immer frei beschleunigen oder verzögern kann, damit durch eine Bewertung von sich durch ein vorliegendes Schleppmoment einstellenden initialen Drehzahlgradienten (der freien Getriebeeingangswelle) das jeweilige vorliegende Schleppmoment im Adaptionsergebnis entsprechend berücksichtigt wird. Es werden für den Adaptionsvorgang daher die initialen Drehzahlgradienten der Getriebeeingangswelle, insbesondere aber nur in einem bestimmten Zeitintervall ermittelt, wobei die zuletzt ermittelten initialen Drehzahlgradienten, die innerhalb einer bestimmten Totzeit ermittelt worden sind, bei der Bestimmung eines Mittelwertes einer bestimmten Anzahl von initialen Drehzahlgradienten unberücksichtigt bleiben, insbesondere der zuvor genannte Mittelwert nur aus den initialen Drehzahlgradienten des zuvor genannten Zeitintervalls kontinuierlich gebildet wird. Aus dem Mittelwert der insbesondere in ein bestimmtes Zeitintervall fallenden initialen Drehzahlgradienten und dem sich aktuell verändernden Drehzahlgradienten der Getriebeeingangswelle, insbesondere während des Einrückvorganges der zu adaptierenden Kupplung, wird dann eine Gradientendifferenz ermittelt. Diese zuvor genannte Gradientendifferenz wird insbesondere kontinuierlich berechnet, nämlich insbesondere zwischen dem aktuellen Drehzahlgradienten der Getriebeeingangswelle und dem Mittelwert der initialen Drehzahlgradienten, die in das zuvor erwähnte bestimmte Zeitintervall (unter Auslassung des Totzeit-Intervalls) fallen. Überschreitet diese kontinuierlich ermittelte Gradientendifferenz einen zuvor festgelegten ersten Grenzwert, wird das "Anlegen" der Reibscheiben der zu adaptierenden Kupplung erkannt, was wiederum zum "Einfrieren" bzw. zum "Abspeichern" des zu diesem Zeitpunkt berechneten Mittelwertes der initialen Drehzahlgradienten der Getriebeeingangswelle führt. Dieser "eingefrorene" bzw. abgespeicherte, insbesondere zuletzt berechnete Mittelwert der initialen Drehzahlgradienten enthält aufgrund der entsprechenden Verzögerung (des Totzeit-Intervalls) keine Drehzahlgradienten-Werte aus dem Anlegevorgang der Reibscheiben und ist daher "hoch aktuell" (bezogen auf die sich nun anschließende Adaptionsphase). Auch berücksichtigt dieser zuletzt berechnete/eingefrorene Mittelwert der initialen Drehzahlgradienten das im System dann tatsächlich existierende jeweilige Schleppmoment. Nun wird dann, auch kontinuierlich, weiterhin die Gradientendifferenz, nämlich nun die Differenz zwischen dem eingefrorenen Mittelwert der initialen Drehzahlgradienten und dem aktuellen Drehzahlgradienten der Getriebeeingangswelle berechnet. Erreicht diese dann insbesondere kontinuierlich ermittelte Gradientendifferenz einen bestimmten zweiten Grenzwert bzw. den zweiten Schwellwert bzw. überschreitet den zweiten Grenzwert bzw. zweiten Schwellwert, wird der entsprechend zugehörige Einrückweg der Kupplung gespeichert, wodurch hierdurch dann der neue aktuelle Kisspoint bestimmt ist bzw. der - alte - Kisspoint dann entsprechend adaptiert wird. Bei bekanntem Massenträgheitsmoment der Getriebeeingangswelle ergibt sich das wirksame Kupplungsmoment (vorzugsweise 1 bis 2 Nm) zum Zeitpunkt des neuen bzw. adaptierten Kisspoints, aus dem Produkt des Massenträgheitsmomentes der Getriebeeingangswelle und der zuvor genannten Gradientendifferenz, wenn diese den zweiten Grenzwert erreicht bzw. überschreitet. Anders ausgedrückt, im Zeitpunkt des neuen bzw. adaptierten Kisspointes liegt dann ein bestimmtes, insbesondere zuvor festgelegtes Kupplungsmoment an, was sich beim neuen Kisspunkt einstellt. Nach der Adaption des Kisspointes kann die der freien Getriebeeingangswelle zugeordnete Kupplung wieder vollständig geöffnet werden. Die Adaption des Kisspoints kann insbesondere auch während des Fahrbetriebs des Kraftfahrzeugs realisiert werden. Bei dem erfindungsgemäßen Adaptionsverfahren wird daher - anders ausgedrückt - die "relative Änderung" des aktuellen Drehzahlgradienten der freien Getriebeeingangswelle bei sich schließender Kupplung, insbesondere also die zuvor genannte Gradientendifferenz permanent bzw. kontinuierlich ermittelt, wobei aufgrund des bekannten Massenträgheitsmomentes der Getriebeeingangswelle das jeweilige "Beschleunigungsmoment" ermittelt wird, was aber dem direkt aufgebrachten Kupplungsreibmoment/Kupplungsmoment entspricht. Zur Erkennung des jeweiligen Kisspoints muss das jeweilige Kupplungsmoment insbesondere ein zuvor definiertes Drehmoment/Reibmoment überschreiten. Der diesem Kupplungsmoment zugeordnete Kupplungsistweg bzw. Kupplungseinrückweg entspricht dann dem gewünschten, neu zu adaptierenden Kisspoint. Das erfindungsgemäße Verfahren kann in kurzen Zeitspannen durchgeführt werden, da keine Mehrfachmessungen zur Bestimmung des Kisspoints erforderlich sind. Systembedingte Schleppmomente, wie wirksame Kupplungsschleppmomente oder wirksame Synchronschleppmomente werden bei dieser Adaptionsstrategie im Wesentlichen unmittelbar vor dem Adaptionsvorgang bzw. dem Einrücken der zu adaptierenden Kupplung ermittelt und direkt im Adaptionsergebnis berücksichtigt. Im Ergebnis sind die zuvor genannten Nachteile vermieden und entsprechende Vorteile erzielt.

Es gibt nun eine Vielzahl von Möglichkeiten, das erfindungsgemäße Verfahren auszugestalten und weiterzubilden. Hierfür darf zunächst auf die dem Patentanspruch 1 nachgeordneten Patentansprüche verwiesen werden. Im Folgenden werden nun eine bevorzugte Ausgestaltung der Erfindung anhand der Zeichnung und der dazugehörigen Beschreibung näher erläutert. In der Zeichnung zeigt:
Fig. 1 in schematischer Darstellung ein Doppelkupplungsgetriebe für ein nur teilweise dargestelltes Kraftfahrzeug mit der entsprechenden Doppelkupplung und der Motorwelle in vereinfachter Darstellung,
Fig. 2 eine schematische Darstellung des erfindungsgemäßen Adaptionsverfahrens, nämlich die Darstellung des Einrückweges der zu adaptierenden Kupplung, der jeweiligen Drehzahlgradienten und der jeweiligen Drehzahlen über die Zeit, ohne dass ein Schleppmoment im System existiert bzw. ermittelt wird,
Fig.3 eine schematische Darstellung des Adaptionsverfahrens, nämlich die Darstellung des Einrückweges der zu adaptierenden Kupplung, der jeweiligen Drehzahlgradienten und der jeweiligen Drehzahlen über die Zeit, mit einem Schleppmoment im System,
Fig. 4 eine schematische Darstellung des Adaptionsverfahrens, nämlich die Darstellung des Einrückweges der zu adaptierenden Kupplung, der jeweiligen Drehzahlgradienten und der jeweiligen Drehzahlen über die Zeit, wobei hier im System ein Synchronschleppmoment existiert bzw. anliegt und eine Positionierungsstrategie durchgeführt wird, und
Fig. 5 eine schematische Darstellung des erfindungsgemäßen Adaptionsverfahrens, nämlich die Darstellung des Einrückweges der zu adaptierenden Kupplung, der jeweiligen Drehzahlgradienten und der jeweiligen Drehzahlen über die Zeit, wobei hier ein Kupplungsschleppmoment existiert bzw. anliegt und eine Positionierungsstrategie durchgeführt wird.

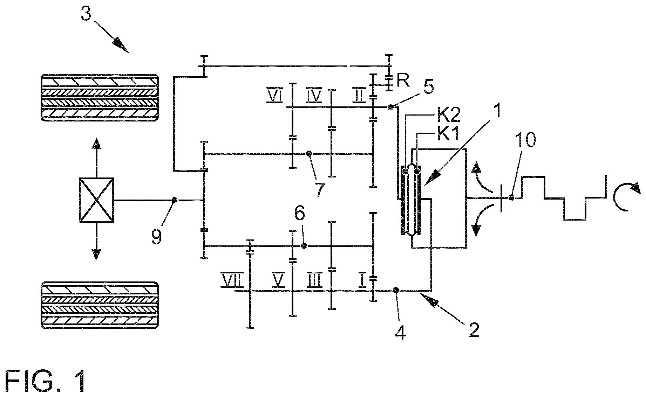

Die Fig. 1 bis 5 zeigen zumindest teilweise die entsprechenden Komponenten zur Realisierung des Verfahrens, nämlich des Verfahrens zur Adaption des Kisspoints zumindest einer der Kupplungen K1 bzw. K2 einer Doppelkupplung 1 eines Doppelkupplungsgetriebes 2 eines hier nur teilweise dargestellten Kraftfahrzeuges 3. Das Doppelkupplungsgetriebe 2 ist hier insbesondere als automatisiertes Doppelkupplungsgetriebe 2 ausgebildet.

Die Fig. 1 zeigt das Doppelkupplungsgetriebe 2 mit der Doppelkupplung 1 und teilweise den Antriebsstrang des nicht näher dargestellten Kraftfahrzeuges 3 in schematischer Darstellung. Das Doppelkupplungsgetriebe 1 weist mehrere Gangstufen bzw. Gänge, hier die Gangstufen bzw. Gänge I bis VII und eine Rückwärtsgangstufe R auf. Der erste Gang bzw. die erste Gangstufe ist mit der Ziffer "I", der zweite Gang bzw. die zweite Gangstufe mit der Ziffer "II" usw. bezeichnet, wobei der Rückwärtsgang mit dem Buchstaben "R" bezeichnet ist, so wie aus Fig. 1 ersichtlich.

Die beiden Kupplungen K1 bzw. K2 sind mit entsprechenden Getriebeeingangswellen 4 bzw. 5 des Doppelkupplungsgetriebes 2 wirksam verbindbar. Hier ist nun die erste Kupplung K1 mit der ersten Getriebeeingangswelle 4 und die zweite Kupplung K2 mit der zweiten Getriebeeingangswelle 5 drehwirksam verbindbar. Der ersten Getriebeeingangswelle 4 ist eine erste Vorlegewelle 6 und der zweiten Getriebeeingangswelle 5 eine zweite Vorlegewelle 7 zugeordnet. Das erste Teilgetriebe wird daher gebildet im Wesentlichen durch die erste Getriebeeingangswelle 4, die erste Vorlegewelle 6 und die Gangstufen I, III, V und VII bzw. durch den ersten, dritten, fünften und siebten Vorwärtsgang. Das zweite Teilgetriebe wird im Wesentlichen gebildet durch die zweite Getriebeeingangswelle 5, die zweite Vorlegewelle 7, die Gangstufen II, IV und VI, also durch den zweiten, vierten und sechsten Vorwärtsgang, wobei mit Hilfe der zweiten Gangstufe II auch die Rückwärtsgangstufe "R" realisierbar ist, insbesondere über eine separate weitere dritte Vorlegewelle 8. Über nicht näher bezeichnete Abtriebszahnräder stehen die jeweiligen Vorlegewellen, hier die erste, zweite und dritte Vorlegewelle 6, 7 und 8 in wirksamer Drehverbindung mit der Abtriebswelle 9 des Doppelkupplungsgetriebes 2. Die Abtriebswelle 9 ist insbesondere über ein nicht näher bezeichnetes Differential mit dem Abtriebsstrang des Kraftfahrzeugs verbunden, so wie schematisch dargestellt.

Weiterhin ist in Fig. 1 gut zu erkennen, eine Motorwelle 10, die insbesondere mit dem Außengehäuse der Doppelkupplung 2 wirksam verbunden ist, um entsprechende Drehmomente auf die Eingangsseiten der ersten und zweiten Kupplung K1 und K2 zu übertragen. Die Ausgangsseiten der ersten und zweiten Kupplung K1 und K2 sind mit der jeweiligen ersten und zweiten Getriebeeingangswelle 4 und 5 wirksam verbunden. Hierbei sind die erste und zweite Kupplung K1 und K2 insbesondere als trockene Reibkupplungen ausgeführt.

Nicht dargestellt in der Fig. 1 sind das entsprechende Steuergerät, insbesondere ein Getriebesteuergerät, sowie Steuerleitungen und/oder Sensoren zur Ermittlung der jeweiligen, insbesondere aktuellen Drehzahlen, wie beispielsweise der Motordrehzahl bzw. der Drehzahl der Motorwelle 10 und/oder der Drehzahl der jeweiligen Getriebeeingangswelle 4 bzw. 5 und/oder der Drehzahl der Abtriebswelle 9. Auch sind entsprechende Synchronisiervorrichtungen, die in den jeweiligen Teilgetrieben angeordnet bzw. vorgesehen sind und/oder entsprechende Schiebemuffen nicht im Einzelnen dargestellt, sowie auch entsprechende andere Sensoren zur Ermittlung etwaiger Drehzahlen von Komponenten der vorhandenen, aber nicht dargestellten Synchronisiervorrichtungen und/oder zur Ermittlung der jeweiligen Einrückwege der jeweiligen Kupplungen K1 bzw. K2 vorgesehen sind. Die Realisierung, insbesondere die Steuerung und/oder die Regelung des erfindungsgemäßen Adaptionsverfahrens wird insbesondere mit Hilfe des nicht dargestellten Steuergerätes, insbesondere eines nicht dargestellten Getriebesteuergerätes realisiert, die entsprechenden Verfahrensschritte dürfen nun im Einzelnen ausführlich wie folgt beschrieben werden:
Der Kisspoint einer der beiden Kupplungen K1 bzw. K2 soll adaptiert werden bzw. wird nun entsprechend adapiert. Hierbei kann nun -je nach Anwendungsfall - der Kisspoint der ersten Kupplung K1 oder auch der Kisspoint der zweiten Kupplung K2 adaptiert werden. Adaptiert wird der Kisspoint der der jeweiligen freien Getriebeeingangswelle zugeordneten Kupplung K1 bzw. K2, also der jeweiligen Kupplung K1 bzw. K2, die der Getriebeeingangswelle des freien (passiven) Teilgetriebes des Doppelkupplungsgetriebes 2 zugeordnet ist, also dem jeweiligen Teilgetriebe, das keine wirksamen Drehmomente auf die Abtriebswelle 9 überträgt. Bei der Durchführung des Verfahrens zur Adaption des Kisspoints werden die insbesondere aktuellen Motordrehzahlen n_{M} der Motorwelle 10 und die aktuellen Synchrondrehzahlen n_{sync1/2} ermittelt bzw. berechnet bzw. sind die entsprechenden aktuellen Synchrondrehzahlen n_{sync1/2} der dem freien Teilgetriebe zugeordneten Getriebeeingangswelle entsprechend bekannt. Vorteilhaft werden die Synchrondrehzahlen n_{sync1/2} dabei abhängig von dem in dem aktiven Teilgetriebe eingelegten Gang gewählt. Wenn "n" dem aktiven Gang des aktiven Teilgetriebes entspricht (also des Teilgetriebes über das der Kraftfluss läuft), dann werden zwei Synchrondrehzahlen n_{sync1/2} des inaktiven Teilgetriebes berechnet, wobei vorteilhaft dann gangtechnisch "n+1" der Synchrondrehzahl n_{sync1} und "n-1" der Synchrondrehzahl n_{sync}2 zugeordnet wird bzw. entspricht. Es werden somit die Synchrondrehzahl für die dem Gang in dem aktuell gefahren wird benachbarten Gänge berechnet, die dem freien Teilgetriebe zugeordnet sind, nämlich insbesondere für den um einen Schritt höheren und den um einen Schritt kleineren Gang, z .B. es wird im vierten Gang gefahren, dann werden die Synchrondrehzahl für den fünften und den dritten Gang berechnet. Diese benachbarten Gänge müssen nicht unbedingt nur um einen Schritt höher bzw. niedriger sein, sondern in dem speziellen Fall, dass zwei nacheinander folgende Gänge dem gleichen Teilgetriebe zugeordnet sind, kann der dem freien Teilgetriebe zugeordnete Gang um mehr als ein Schritt höher bzw. niedriger sein. Natürlich können auch den anderen Gängen zugeordneten Synchrondrehzahlen berechnet bzw. verwendet werden. Die Synchrondrehzahlen werden vorteilhaft aus der Abtriebsdrehzahl berechnet, was nicht unbedingt bedeutet, dass ein Abtriebsdrehzahlsensor vorhanden sein muss, sondern die könnten auch aus der Getriebeeingangswellendrehzahl des aktiven Teilgetriebes mit Berücksichtigung der Übersetzung des eingelegten Ganges berechnet werden. Weiterhin werden die Drehzahlen n_{GE} der dem freien Teilgetriebe zugeordnete Getriebeeingangswelle 4 bzw. 5 erfasst. Vor dem Start bzw. bei Beginn des Verfahrens zur Adaption des Kisspointes ist die jeweilige zu adaptierenden Kupplung K1 bzw. K2 zunächst vollständig geöffnet.

Die dem
freien Teilgetriebe zugeordneten Gänge (I, III, V, VII bzw. II, IV, VI) und/oder die dem freien Teilgetriebe zugeordneten Synchronisiervorrichtungen werden ausgelegt bzw. geöffnet, wobei danach zunächst eine Ermittlung und/oder Bewertung der auf die (freie) Getriebeeingangswelle möglicherweise beschleunigend oder verzögernd einwirkenden Schleppmomente erfolgt.

Bei dem Verfahren wird daher der Kisspoint einer Kupplung, hier der Kupplung K1 bzw. K2, die zwischen der Motorwelle 10 und der Getriebeeingangswelle 4 bzw. 5 eines Teilgetriebes des Doppelkupplungsgetriebes 2 angeordnet ist, adaptiert, wobei der Kisspoint der jeweiligen passiven Kupplung K1 bzw. K2, insbesondere während der Fahrt des Kraftfahrzeugs adaptiert wird, also derjenigen Kupplung K1 bzw. K2, die nicht den Drehmomentenfluss für den Antrieb des Kraftfahrzeugs bereitstellt, sondern die dem jeweiligen freien Teilgetriebe zugeordnet ist. Deren Kupplungssteller wird zur Adaption des Kisspointes entsprechend gesteuert ein- bzw. ausgerückt, wobei aber - wie oben erwähnt - zunächst eine Ermittlung und/oder eine Bewertung der auf die freie Getriebeeingangswelle möglicherweise beschleunigend oder verzögernd einwirkenden Schleppmomente erfolgt, so dass - bei der Adaption des Kisspointes - falls derartige Schleppmomente im System bzw. in dem jeweils freien Teilgetriebe wirken sollten, dann auch ihre Berücksichtigung finden können. Der Kisspoint einer Kupplung verändert sich im Laufe des Betriebs des Kraftfahrzeugs insbesondere aufgrund des Verschleißes der Reibelemente der jeweiligen Kupplung und/oder insbesondere unter entsprechenden verschiedenen Temperaturbedingungen. Mit dem Verfahren kann nun der

Kisspoint adaptiert, also ein neuer Kisspoint insbesondere während der Fahrt des Kraftfahrzeugs ermittelt werden und dies in einer recht schnellen und kleinen Zeitspanne (< 1 Sekunde). Grundsätzliche Voraussetzung ist, dass die zu adaptierende Kupplung für die Drehmomentenübertragung zum Antrieb des Kraftfahrzeugs eben zunächst nicht im Eingriff ist, d. h. zunächst vollständig geöffnet ist.

Mit dem Verfahren werden daher auch temporär im jeweiligen freien Teilgetriebe die Schleppmomente erfasst und bei der Adaption des Kisspointes berücksichtigt. Derartige Schleppmomente können beispielsweise durch Reibelemente der dem jeweiligen Teilgetriebe zugeordneten Synchronisiervorrichtungen erzeugt werden, auch wenn diese Synchronisiervorrichtungen geöffnet sind. Diese zuvor beschriebenen, durch Synchronisiervorrichtungen bedingte Schleppmomente werden im Folgenden grundsätzlich als "Synchronschleppmomente" bezeichnet. Weiterhin können auch kupplungsbedingte Schleppmomente im System vorliegen, auch wenn die jeweilige dem freien Teilgetriebe zugeordnete Kupplung K1 bzw. K2 vollständig geöffnet ist. Diese zuvor beschriebenen Schleppmomente werden im Folgenden grundsätzlich als "Kupplungsschleppmomente" bezeichnet. Bedingt durch die Synchronschleppmomente oder die Kupplungsschleppmomente kann die Drehzahl der dem freien Teilgetriebe zugeordnete Getriebeeingangswelle sich auch entsprechend ändern, nämlich beispielsweise relativ zur Motordrehzahl betrachtet entweder beschleunigt oder verzögert werden. Denkbar ist auch, dass die Drehzahl der freien Getriebeeingangswelle, die dem Teilgetriebe der zu adaptierenden Kupplung zugeordnet ist, auf einer entsprechenden Drehzahl, beispielsweise auf der Synchrondrehzahl oder auf der Motordrehzahl verharrt oder "festgehalten" wird. Wird ein Kisspoint einer Kupplung ohne Berücksichtigung von im System vorhandenen möglichen Schleppmomenten beispielsweise nur durch eine absolute Drehzahländerung der Getriebeeingangswelle der zu adaptierenden Kupplung bestimmt, dann ergibt sich daraus ein ungenau bestimmter Kisspoint aufgrund insbesondere auch zeitlich variierender Schleppmomente im entsprechenden Teilgetriebe. Mit Hilfe des Verfahrens kann nun die Genauigkeit des ermittelten Kisspoints gesteigert werden, was im Folgenden genauer erläutert werden darf.

Von besonderem Vorteil und auch ein wesentliches Merkmal des erfindungsgemäßen Verfahrens ist eine sogenannte "Positionierungsstrategie", mit deren Hilfe die dem jeweiligen freien Teilgetriebe zugeordnete freie Getriebeeingangswelle der zu adaptierenden Kupplung K1 bzw. K2 vor dem Einrücken der Kupplung K1 bzw. K2 bezüglich ihrer Drehzahl auf bestimmte Art und Weise positioniert. Insbesondere nämlich so dass die freie Getriebeeingangswelle 4 bzw. 5 während des Einrückens der ihr zugeordneten Kupplung K1 bzw. K2 noch entsprechend frei beschleunigen oder verzögert werden kann, aber die Drehzahl der freien Getriebeeingangswelle 4 bzw. 5 dann auch nicht in einem der zugeordneten Synchrondrehzahlbereiche n_{sync1/2} und auch nicht im Bereich der Motordrehzahl n_{M} liegen darf bzw. liegen sollte.

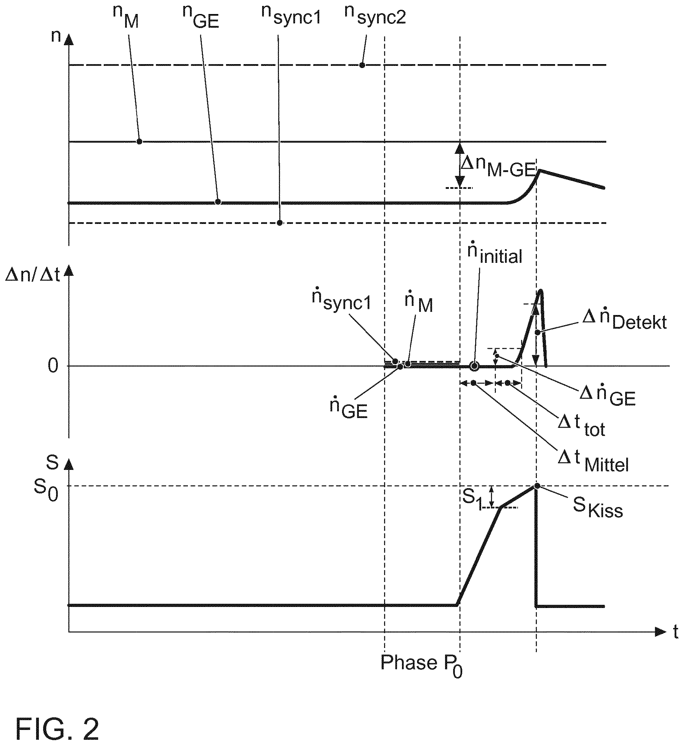

Die Fig. 2 bis 4 zeigen nun wesentliche Schritte des Verfahrens:
Allen Fig. 2 bis 5 ist zunächst gemeinsam, dass hier über die Zeit t in der unteren Zeile der Einrückweg s der jeweiligen zu adaptierenden Kupplung K1 bzw. K2, also derjenigen Kupplung, die dem freien Teilgetriebe bzw. der freien Getriebeeingangswelle zugeordnet ist, dargestellt ist. In der Zeile darüber sind in den jeweiligen Fig. 2 bis 5 jeweils über die Zeit t der Verlauf verschiedener Drehzahlgradienten Δₙ/Δₜ dargestellt sowie auch entsprechende noch näher zu erläuternde Differenzen zwischen den jeweiligen Drehzahlgradienten und weitere Zeitspannen dargestellt sind. In der obersten Zeile der Fig. 2 bis 5 ist jeweils dann über die Zeit t der Verlauf der entsprechenden Drehzahlen n dargestellt, insbesondere der Drehzahl n_{M} der Motorwelle 10, der Drehzahl n_{GE} der freien Getriebeeingangswelle sowie etwaige zugeordnete jeweiligen Synchrondrehzahlen n_{sync1/2} sowie insbesondere auch eine bestimmte Differenz Δn_{M-GE} zwischen der Motordrehzahl n_{M} und der Drehzahl n_{GE} der freien Getriebeeingangswelle dargestellt ist.

Wie die Fig. 2 bis 5 weiterhin zeigen wird nun der Drehzahlgradient ṅ_{GE} der entsprechenden Getriebeeingangswelle 4 bzw. 5, der Motor-Drehzahlgradient ṅ_{M} der Motorwelle 10 und der Synchron-Drehzahlgradient ṅ_{sync1/2} mindestens einer zugeordneten und geöffneten Synchronisiervorrichtung, also der Drehzahlgradient der entsprechenden Synchrondrehzahl dieser Synchronvorrichtung ermittelt und/oder erfasst. Die jeweiligen Drehzahlgradienten " ṅ" sind in den Fig. 2 bis 5 in der mittleren Zeile dargestellt bzw. deren Verlauf über die Zeit t, wobei der Verlauf der Drehzahlen n, nämlich der Drehzahl n_{M} der Motorwelle 10, der Drehzahl n_{GE} der jeweiligen freien Getriebeeingangswelle und die jeweiligen Synchrondrehzahlen n_{sync1} bzw. n_{sync}2 (also n_{sync1/2}) in der oberen Zeile der Fig. 2 bis 5 bzw. deren Verlauf über die Zeit t dargestellt ist. Schließlich ist in der untersten Zeile der Fig. 2 bis 5, wie bereits auch erwähnt, der Einrückweg s der jeweils zu adaptierenden Kupplung K1 bzw. K2 dargestellt.

Alle in den Fig. 2 bis 5 dargestellten jeweiligen Werte für die dortigen Drehzahlen, Drehzahlgradienten bzw. für den Einrückweg der Kupplung etc. werden über entsprechende in der Fig. 1 nicht dargestellte Sensoren, insbesondere permanent erfasst dem entsprechenden (nicht dargestellten) Steuergerät zugeleitet bzw. hier mit Hilfe des Steuergerätes berechnet. Mit Hilfe des Steuergerätes, das eine entsprechende Speichereinheit und mindestens einen entsprechenden Prozessor aufweist werden die Verfahrensschritte durchgeführt bzw. gesteuert und/oder geregelt.

Da mit Hilfe des Verfahrens eine Ermittlung und/oder Bewertung der auf die Getriebeeingangswelle möglicherweise beschleunigend oder verzögernd einwirkenden Kupplungsschleppmomente oder der Synchronschleppmomente erfolgt, muss nun zunächst in einer ersten Phase P₀, die auch aus den Fig. 2 bis 5 ersichtlich ist, festgestellt werden, ob derartige Schleppmomente im System existieren bzw. vorliegen. Hierzu wird in dieser ersten Phase P₀, wenn also die zu adaptierende Kupplung K1 bzw. K2 vollständig geöffnet ist, zur Ermittlung und/oder zur Bewertung eines möglicherweise existierenden Kupplungsschleppmomentes der Drehzahlgradient ṅ_{GE} der Getriebeeingangswelle verglichen mit dem Motor-Drehzahlgradient ṅ_{M} der Motorwelle 10. Zur Ermittlung und/oder Bewertung eines möglicherweise existierenden Synchronschleppmomentes wird der Drehzahlgradient ṅ_{E} der Getriebeeingangswelle verglichen mit dem jeweiligen Synchron-Drehzahlgradienten ṅ_{sync1/2} (ṅ_{sync1} bzw. ṅ_{sync2}).

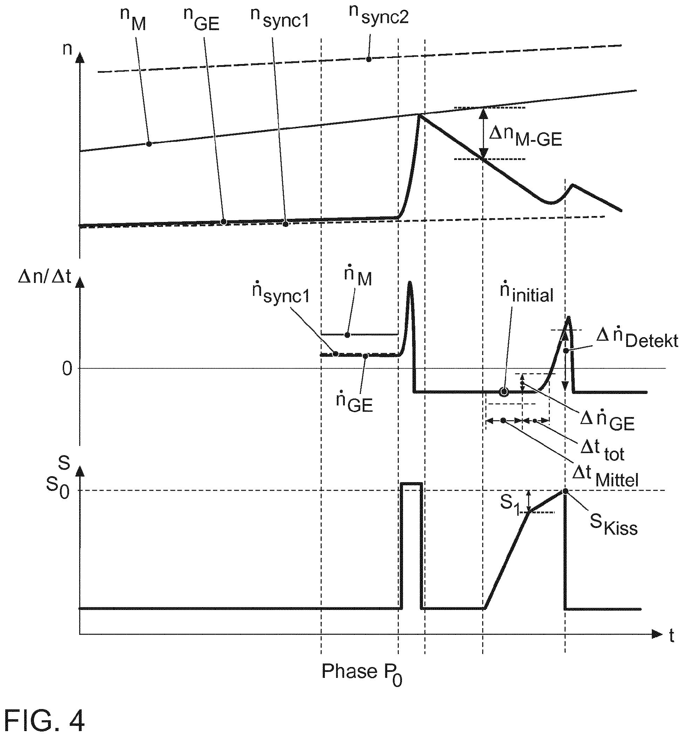

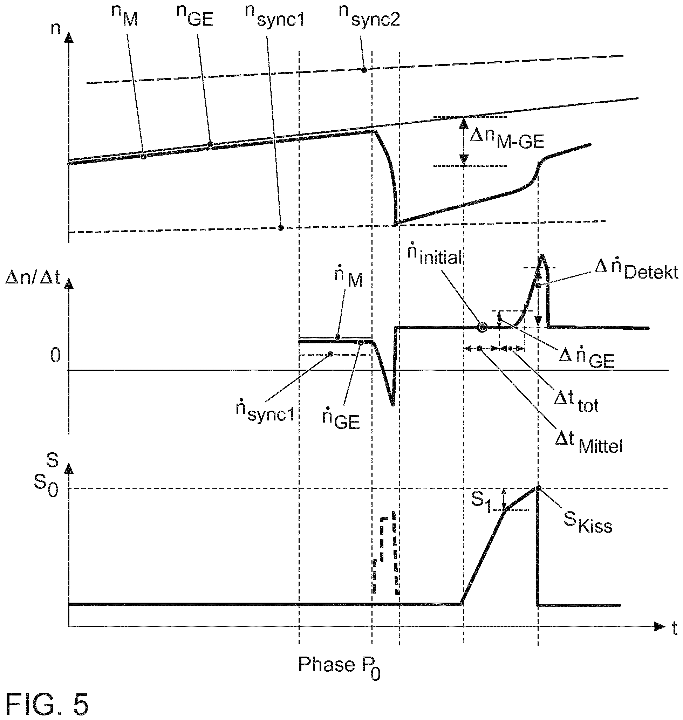

Der Idealzustand, bei dem keine Schleppmomente vorliegen ist nun zunächst in der Fig. 2 dargestellt. Alle Gänge bzw. Gangstufen des betreffenden freien Teilgetriebes (hier die Gänge II, IV, VI, R bzw. I, III, V, VII) sind ausgelegt und die dem freien Teilgetriebe zugehörige Kupplung K1 bzw. K2 ist vollständig geöffnet. Beispielsweise soll nun der Kisspoint der Kupplung K1 adaptiert werden, so dass dann die Gänge I, III, V, VII im ersten Teilgetriebe ausgelegt sind und der Kraftfluss zum Antrieb, also zur Abtriebswelle 9 des Kraftfahrzeugs über die Kupplung K2 und das zweite Teilgetriebe mit einer dort eingelegten Gangstufe realisiert wird. Über die vorhandene Sensorik bzw. Sensoren wird die Motordrehzahl n_{M} des Antriebsmotors bzw. die Drehzahl n_{M} der Motorwelle 10 sowie die Drehzahl n_{GE} der Getriebeeingangswelle 4 des freien Teilgetriebes, bei dem zuvor genannten Beispiel des ersten Teilgetriebes, erfasst. Vor dem Einrücken des Kupplungsstellers, hier des Kupplungsstellers der Kupplung K1 werden dann durch eine entsprechende Berechnung mit Hilfe des Steuergerätes die Drehzahlgradienten, hier der Drehzahlgradient ṅ_{GE} der Getriebeeingangswelle sowie der Motor-Drehzahlgradient ṅ_{M} der Motorwelle 10 ermittelt. Die Drehzahlgradienten ṅ_{GE} bzw. ṅ_{M} bei dem in Fig. 2 dargestellten Beispiel haben hier im Wesentlichen den Wert "Null", so wie dargestellt. Weiterhin werden auch die Synchron-Drehzahlgradienten, hier der Synchron-Drehzahlgradient n_{sync1} ermittelt. Wie sich aus der Fig. 2 sowohl aus der oberen wie auch aus der mittleren Zeile ergibt, wird die Drehzahl n_{GE} der Getriebeeingangswelle, bei dem zuvor genannten Beispiel der Getriebeeingangswelle 4 über die Zeit t zumindest bis zum Ende der Phase P₀ im Wesentlichen weder beschleunigt noch verzögert (auch der entsprechende Drehzahlgradient ṅ_{GE} entspricht daher im Wesentlichen dem Wert "Null"). Da die Drehzahl n_{GE} der Getriebeeingangswelle 4 weder verzögert noch beschleunigt wird, also weder in Richtung der Motordrehzahl n_{M} noch in Richtung der Synchrondrehzahl n_{sync1} beschleunigt oder verzögert wird (und auch die Drehzahl n_{GE} der Getriebeeingangswelle nicht im Bereich der Synchrondrehzahl n_{sync1} liegt) liegen keine dominanten Schleppmomente im System vor (zumindest geht die Summe aller möglichen Schleppmomente im Wesentlichen gegen "Null"). Es sollte daher zunächst insbesondere die relative Lage der Drehzahl n_{GE} der Getriebeeingangswelle 4 zur Motordrehzahl n_{M} und/oder auch zur Synchrondrehzahl n_{sync1/2} erfasst und/oder ermittelt werden, denn es könnte beispielsweise sein, dass die Drehzahl n_{E} der jeweiligen Getriebeeingangswelle 4 bzw. 5 im Bereich der Synchrondrehzahl "festhängt" (wie beispielsweise in Fig. 4 im Drehzahlbereich n_{sync1}) oder auch im Bereich der Motordrehzahl n_{M} "festhängt" (wie beispielsweise in Fig. 5 dargestellt). Die Feststellung/Ermittlung der relativen Lage der Drehzahl n_{GE} der Getriebeeingangswelle 4 zur Motordrehzahl n_{M} und/oder zur Synchrondrehzahl n_{sync1/2} ist daher auch für die oben angesprochene etwaige diesbezügliche "Positionierungsstrategie" wesentlich. Auch ist wesentlich, dass die Differenz Δn_{M-GE} zwischen der Motordrehzahl n_{M} und der Drehzahl n_{GE} der Getriebeeingangswelle, bei dem zuvor genannten Beispiel der Getriebeeingangswelle 4, erfasst wird, so wie dies in den Fig. 2 bis 5 an zumindest einer Stelle auch grafisch dargestellt ist, und dass aber insbesondere der Adaptionsvorgang erst beginnt, wenn diese Differenz Δn_{M-GE} einen bestimmten Grenzwert überschreitet, denn die Drehzahl n_{GE} der Getriebeeingangswelle wird durch den Einrückvorgang der Kupplung immer in Richtung der Motordrehzahl n_{M} beschleunigt und andernfalls würde eine zu kleine Differenz Δn_{M-GE} dazu führen, dass bereits vor Abschluss der Adaption die Drehzahl n_{GE} der Getriebeeingangswelle bereits synchron mit der Motordrehzahl n_{M} ist.

Die relative Lage der Drehzahl n_{GE} der Getriebeeingangswelle, bei dem zuvor genannten Beispiel der Getriebeeingangswelle 4, so wie in den Fig. 2 bis 5 dargestellt, wird im Wesentlichen während der Phase P₀ ermittelt. Befindet sich die Drehzahl n_{GE} der Getriebeeingangswelle 4 bereits auf dem Drehzahlniveau einer der den Synchronisiervorrichtungen zugeordneten Synchrondrehzahl n_{sync1/2} (vgl. Fig. 4) bzw. entspricht der Drehzahlgradient ṅ_{GE} der Getriebeeingangswelle 4 im Wesentlichen dem Synchrondrehzahl-Gradienten n_{sync1/2} (wie in Fig. 4 in Phase P₀ grafisch dargestellt) dann kann ein entsprechendes Synchronschleppmoment vorliegen. Ähnliches gilt für die Motordrehzahl n_{M}, wie in Fig. 5 gezeigt. Hier in Fig. 5 liegt die Drehzahl n_{GE} der Getriebeeingangswelle 4 auf dem entsprechenden Drehzahlniveau der Drehzahl n_{M} der Motorwelle 10. Es könnte daher ein entsprechendes Kupplungsschleppmoment vorliegen.

Daher muss bei den in den Fig. 4 und 5 dargestellten Fällen eine gezielte Positionierung der Drehzahl n_{GE} der Getriebeeingangswelle 4 erfolgen, was im Folgenden aber noch erläutert werden darf.

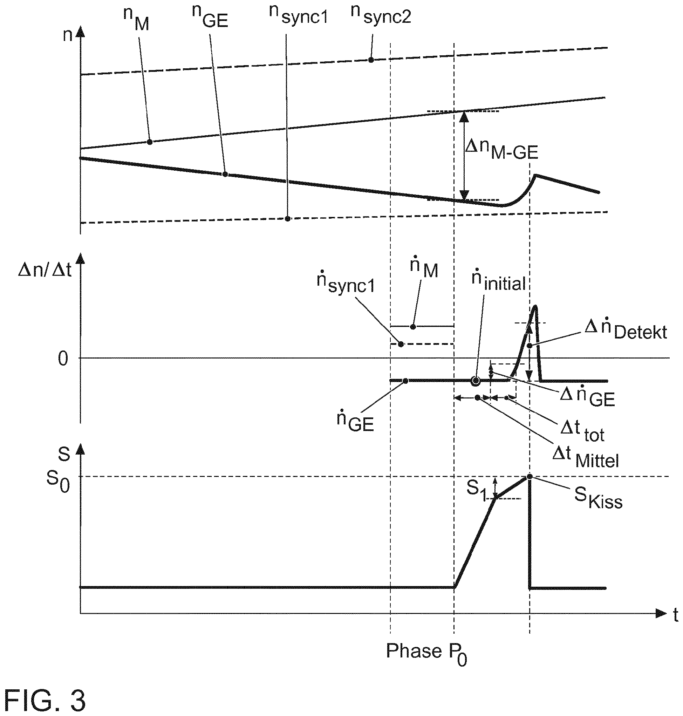

In Fig. 2 jedenfalls liegen, für den hier dargestellten Fall, keine relevanten Schleppmomente vor. Fig. 2 zeigt für die Phase P₀, dass die Drehzahlgradienten ṅ_{GE}, n_{M} und ṅ_{sync1} im Wesentlichen das gleiche Niveau haben (hier den Wert "Null"). Eine Differenz zwischen den jeweiligen Drehzahlgradienten, insbesondere zwischen dem Drehzahlgradienten ṅ_{GE} und n_{sync1} bzw. zwischen ṅ_{GE} und ṅ_{M} existiert bei dem Beispiel in Fig. 2 nicht. Die zuvor genannten Differenzen haben hier im Wesentlichen den Wert "Null", insbesondere überschreiten die jeweiligen Differenzen keinen festgelegten Grenzwert. Daher können hier in Fig. 2 in der Phase P₀ relevante Schleppmomente ausgeschlossen werden. Auch ist die relative Lage der Drehzahl n_{GE} der Getriebeeingangswelle 4 unterschiedlich zu den jeweiligen relativen Lagen der Drehzahlen n_{M} der Motorwelle 10 bzw. der Synchrondrehzahl n_{sync1/2}. Bei dem in Fig. 2 dargestellten Fall werden daher keine Schleppmomente ermittelt bzw. können diese nun entsprechend ausgeschlossen werden. Wesentlich ist auch, dies gilt auch für die in den Fig. 3 bis 5 dargestellten Anwendungsfälle, nämlich dass die zumindest erforderliche Differenz Δn_{M-GE} auch existiert, so wie in Fig. 2 am Ende der Phase P₀ dargestellt. Es ist aber hier in Fig. 2 daher keine gezielte separate Positionierung der Getriebeeingangswelle 4 erforderlich.

Bevor nun auf die Adaption des Kisspointes näher eingegangen werden kann, darf auf die zu der Fig. 2 aus den Fig. 3 bis 5 erkennbaren Unterschiede, insbesondere auf die in den Fig. 4 und 5 hier dargestellte, unterschiedliche Positionierungsstrategie vorab nochmals näher eingegangen werden:
In Fig. 3 werden nun zunächst - ähnlich wie in Fig. 2 - in der Phase P₀ die entsprechenden Werte für die Drehzahlen n_{GE} der Getriebeeingangswelle, bleibend bei dem zuvor genannten Beispiel hier nun der Getriebeeingangswelle 4, die Motordrehzahl n_{M} der Motorwelle 10, die Synchrondrehzahl n_{sync1/2} bzw. die jeweiligen Drehzahlgradienten ṅ_{GE}, ṅ_{M} und ṅ_{sync1} ermittelt (aus Gründen der Übersichtlichkeit ist in den Fig. 2 bis 5 der Drehzahlgradient ṅ_{sync2} nicht dargestellt, dieser wird selbstverständlich aber ebenfalls berechnet bzw. ermittelt). Aufgrund der in Phase P₀ ermittelten Werte ist ersichtlich, dass der Drehzahlgradient ṅ_{GE} wesentlich unterhalb des Motor-Drehzahlgradienten ṅ_{M} bzw. unterhalb des Synchron-Drehzahlgradienten ṅ_{sync1} liegt. Auch die relative Lage (bzw. der Drehzahlabstand) der Drehzahl n_{GE} der Getriebeeingangswelle 4 zu den zugehörigen anderen Drehzahlen wie der Motordrehzahl n_{M} und der Synchrondrehzahlen n_{sync1/2} werden in der Phase P₀ entsprechend ermittelt. Da, wie die Fig. 3 zeigt, die Drehzahl n_{GE} der Getriebeeingangswelle 4 weder synchron bzw. im Bereich der Motordrehzahl n_{M} noch synchron bzw. im Bereich der Synchrondrehzahlen n_{sync1/2} liegt, ist erkennbar, dass ein entsprechendes Synchronschleppmoment vorliegt (vgl. Fig. 3 gesamter grafischer Verlauf). Insbesondere zeigt die Fig. 3, dass zwischen dem Drehzahlgradienten ṅ_{GE} der Getriebeeingangswelle und dem Synchron-Drehzahlgradienten ṅ_{sync1} eine entsprechende Differenz existiert, die insbesondere größer als ein vorher festgelegter Grenzwert ist. Aufgrund der Differenzbildung zwischen den Drehzahlgradienten ṅ_{GE} der Getriebeeingangswelle und dem Motor-Drehzahlgradienten ṅ_{M} bzw. der Differenzbildung zwischen Drehzahlgradient ṅ_{GE} der Getriebeeingangswelle und dem Synchron-Drehzahlgradienten ṅ_{sync1}, wobei sich - wie aus Fig. 3 ersichtlich - ergibt, dass diese Differenzen hier kleiner als "Null" sind, ergibt sich auch, dass die Getriebeeingangswelle hier in Richtung der Synchrondrehzahl n_{sync1} verzögert wird (wie Fig. 3 zeigt). Es liegt also ein entsprechendes Synchronschleppmoment an. Die Fig. 3 zeigt, dass die Drehzahl n_{GE} der Getriebeeingangswelle 4 abfällt und diese sich in Richtung der Synchrondrehzahl n_{sync1} bewegt. Für den hier in Fig. 3 gezeigten Anwendungsfall ist nun auch die Erfassung der Differenz Δn_{M-GE} aus der Motordrehzahl n_{M} und der Drehzahl n_{GE} der Getriebeeingangswelle 4 wesentlich, denn einerseits kann der Adaptionsvorgang erst beginnen, wenn diese Differenz Δn_{M-GE} einen bestimmten Grenzwert überschreitet. Jedoch darf, wie aus Fig. 3 ersichtlich, die Drehzahl n_{GE} der Getriebeeingangswelle 4 die Synchrondrehzahl n_{sync1} während des Einrückvorganges der Kupplung, bei dem zuvor erwähnten Beispiel der ersten Kupplung K1, nicht kreuzen, da eine kontinuierliche Erfassung des Synchronschleppmomentes nur möglich ist, solange die Getriebeeingangswelle, bei dem genannten Beispiel die Getriebeeingangswelle 4 des ersten freien Teilgetriebes, auch noch frei beschleunigen bzw. verzögern kann, sich also dann nicht im Bereich der Synchrondrehzahl n_{sync1} befindet. Mit Hilfe des Verfahrensschrittes der Positionierungsstrategie wird bei Fig. 3 in der Phase P₀ daher mit Hilfe des relativen Verhältnisses des Drehzahlgradienten ṅ_{GE} der Getriebeeingangswelle 4 zum Synchron-Drehzahlgradienten ṅ_{sync1} berechnet, nach welcher Zeitperiode die Drehzahl n_{GE} der Getriebeeingangswelle 4 die Synchrondrehzahl n_{sync1} erreichen wird. Ist die notwendige Zeit für das geplante Einrücken der Kupplung (vgl. Fig. 3, die Zeitspanne für das Einrücken der Kupplung nach der Phase P₀) noch ausreichend bzw. geringer als die zuvor berechnete Zeitperiode, so muss keine gezielte Positionierung der Drehzahl n_{GE} der Getriebeeingangswelle 4 erfolgen bevor der Adaptionsvorgang beginnt. Der Adaptionsvorgang kann also hier entsprechend starten, vorausgesetzt auch die erforderlicher Differenz Δn_{M-GE} liegt bereits vor, ansonsten wäre noch eine entsprechende Wartephase erforderlich, bis diese zuvor genannte Differenz Δn_{M-GE} auch anliegt.

In den Fig. 4 und 5 werden, wie hier ersichtlich und grafisch dargestellt, auch in der dortigen jeweiligen Phase P₀ die entsprechenden Drehzahlgradienten ṅ_{E}, ṅ_{sync1} (bzw. ṅ_{sync2}, aber nicht dargestellt) bzw. ṅ_{M} erfasst. Auch wird die relative Lage der Drehzahl n_{E} der Getriebeeingangswelle 4 zur relativen Lage der jeweiligen Motordrehzahl n_{M} bzw. n_{sync1} erfasst. Hierbei wird nun bei dem Anwendungsfall in Fig. 4 festgestellt, dass die Drehzahl n_{E} der Getriebeeingangswelle 4 im Bereich der Synchrondrehzahl n_{sync1} vor bzw. während der Phase P₀ verläuft. Auch hier werden in der Phase P₀ die entsprechenden Differenzen zwischen den Drehzahlgradienten ṅ_{GE}, ṅ_{M} bzw. ṅ_{sync1} berechnet bzw. gebildet. Aus der Fig. 4 ist ersichtlich, dass hier ein Synchronschleppmoment vorliegt, insbesondere in der Phase P₀ die Drehzahl n_{GE} der Getriebeeingangswelle, hier der Getriebeeingangswelle 4 im Drehzahlbereich der Synchrondrehzahl n_{sync1} festhängt. Hingegen wird dem in bei Fig. 5 gezeigten Anwendungsfall vor bzw. während der Phase P₀ festgestellt, dass hier die Drehzahl n_{GE} der Getriebeeingangswelle 4 im Bereich der Motordrehzahl n_{M} verläuft. Es liegt daher ein entsprechendes Kupplungsschleppmoment bei Fig. 5 vor. In den Phasen P₀ (der Fig. 4 und 5) wird daher ein entsprechendes Synchronschleppmoment (Fig. 4) bzw. ein entsprechendes Kupplungsschleppmoment (Fig. 5) ermittelt, so dass hier nun vor Beginn des Adaptionsvorganges die Drehzahl n_{GE} der Getriebeeingangswelle 4 nun zunächst gezielt positioniert wird. Durch die gezielte Positionierung der Drehzahl n_{E} der Getriebeeingangswelle 4 wird das jeweilige anliegende Schleppmoment bei der Adaption des Kisspoints dann insbesondere mit Hilfe der Betrachtung des sich einstellenden Drehzahlgradienten ṅ_{GE} der Getriebeeingangswelle entsprechend berücksichtigt, dies darf im Folgenden noch ausführlich erläutert werden. Zuvor darf aber bezüglich der gezielten Positionierung der Drehzahl n_{GE} der Getriebeeingangswelle 4, also zu den Fig. 4 und 5 noch folgendes ausgeführt werden:
Wird nun wie in Fig. 4 ein Synchronschleppmoment ermittelt, insbesondere dann, wenn die Drehzahl n_{GE} der Getriebeeingangswelle 4 im Bereich der Synchrondrehzahl n_{sync1} verläuft, so wird dann die zu adaptierende Kupplung, hier bei dem Beispiel die Kupplung K1 kurzzeitig geschlossen, damit die Drehzahl n_{GE} der Getriebeeingangswelle 4 von der Synchrondrehzahl n_{sync1} weggeführt wird. Dies ist in Fig. 4 nach der Phase P₀ entsprechend dargestellt und aus Fig. 4 erkennbar. Hier läuft die Drehzahl n_{GE} nach der Phase P₀ kurzzeitig hoch bis auf die Motordrehzahl n_{M} und nachdem die Kupplung, hier die Kupplung K1 dann wieder vollständig geöffnet wird, beginnt die Drehzahl n_{GE} der Getriebeeingangswelle 4 wieder herunterzulaufen.

Fig. 5 hingegen zeigt nun den Anwendungsfall, wo im System, insbesondere im freien Teilgetriebe ein Kupplungsschleppmoment ermittelt wird, da hier die Drehzahl n_{GE} der Getriebeeingangswelle 4 zunächst im Bereich der Motordrehzahl n_{M} verläuft. Nach der dortigen Phase P₀ wird dann im freien Teilgetriebe zunächst zumindest teilweise ein Gang bzw. eine Gangstufe eingelegt, insbesondere ansynchronisiert, also bei dem Beispiel der zu adaptierenden ersten Kupplung K1 eine der Gangstufen I, III, V oder VII eingelegt, insbesondere ansynchronisiert. Dies führt dazu, dass die Drehzahl n_{GE} der Getriebeeingangswelle von der Motordrehzahl n_{M} abfällt, insbesondere hier von der Motordrehzahl n_{M} weggeführt wird, so wie in Fig. 5 grafisch nach der Phase P₀ dargestellt. Erst nachdem die jeweilige Synchronisiervorrichtung im freien Teilgetriebe wieder ausgelegt worden ist, beginnt die Drehzahl n_{GE} der Getriebeeingangswelle 4 dann wieder in Richtung der Motordrehzahl n_{M} hochzulaufen, so wie in Fig. 5 dargestellt bzw. aus Fig. 5 ersichtlich.

Die Fig. 4 und 5 zeigen daher die "Positionierungsstrategie" der Drehzahl n_{GE} der Getriebeeingangswelle, hier der Getriebeeingangswelle 4 bzw. die Veränderung derer relativen Lage nach der Ermittlung eines Kupplungs- bzw. Synchronschleppmomentes. Diese gezielte Positionierung der Drehzahl n_{GE} der Getriebeeingangswelle 4 wird bei Ermittlung eines jeweiligen Schleppmomentes daher vor dem Adaptionsvorgang entsprechend durchgeführt.

Die Fig. 2 bis 5 zeigen nun insbesondere einen sich direkt oder indirekt an die Phase P₀ anschließenden Adaptionsvorgang, nämlich die Adaption des Kisspointes der Kupplung, hier beispielhaft der Kupplung K1. In den Fig. 2 und 3 schließt sich der Adaptionsvorgang im Wesentlichen direkt nach der Phase P₀ an. Bei den Fig. 4 und 5 erfolgt der Beginn des Adaptionsvorganges auch nach der Phase P₀, aber nicht direkt, sondern erst nachdem die gezielte Positionierung der Drehzahl n_{GE} der Getriebeeingangswelle 4 erfolgt ist. Allerdings kann der Adaptionsvorgang erst beginnen, wenn die bereits oben erwähnte Differenz Δn_{M-GE} aus der Motordrehzahl n_{M} und aus der Drehzahl n_{GE} der Getriebeeingangswelle 4 einen bestimmten Grenzwert überschreitet. Dieses ist aus den Fig. 2 bis 5 ersichtlich bzw. hier entsprechend dargestellt.

Der Adaptionsvorgang zur Ermittlung des neuen Kisspointes, der im Wesentlichen aber für alle Anwendungsfälle der Fig. 2 bis 5 gleichermaßen verläuft darf nun im Wesentlichen wie folgt beschrieben werden:
Insbesondere nach der ersten Phase P₀ (direkt oder indirekt nach dieser Phase P₀) werden zu Beginn des Adaptionsvorganges, insbesondere nämlich wenn die Kupplung, hier beispielhaft die Kupplung K1, zur Adaption des Kisspoints beginnt einzurücken die initialen Drehzahlgradienten ṅᵢₙᵢₜᵢₐₗ der Getriebeeingangswelle 4 zyklisch ermittelt und/oder berechnet. Hierbei werden insbesondere bezogen auf einen festen Takt eine bestimmte Anzahl der Werte der initialen Drehzahlgradienten ṅᵢₙᵢₜᵢₐₗ, insbesondere in einem Ringpuffer gespeichert.

Wie die Fig. 2 bis 5 weiterhin zeigen wird die Kupplung, hier beispielhaft die Kupplung K1, insbesondere nun rampenförmig eingerückt, wobei die Rampenschrittweite vor dem Erreichen des zuletzt bekannten Kisspoints S₀ zur Erhöhung der Detektionsgenauigkeit verringert wird, insbesondere wenn ein bestimmter Einrückabstand s₁ zum zuletzt bekannten Kisspoint S₀ unterschritten wird. Wie bereits eingangs beschrieben, wird aus den initialen Drehzahlgradienten ṅᵢₙᵢₜᵢₐₗ, insbesondere aus einer bestimmten Anzahl und/oder innerhalb eines bestimmten ersten Zeitintervalls liegender initialer Drehzahlgradienten ṅᵢₙᵢₜᵢₐₗ, ein Mittelwert ṅ_{initialMittel} gebildet bzw. berechnet, insbesondere in kontinuierlicher Art und Weise. Wenn die Kupplung, hier die Kupplung K1, dann geschlossen wird, wird nun zusätzlich eine Gradientendifferenz zwischen dem zuvor genannten Mittelwert ṅ_{initialMittel} und dem aktuellen Drehzahlgradienten ṅ_{GE} der Getriebeeingangswelle berechnet. Wenn nun - bei teils eingerückter Kupplung, hier beispielsweise der ersten Kupplung K1 - dann eine bestimmte, vorzugsweise eindeutige Änderung der Gradientendifferenz eintritt, nämlich diese Gradientendifferenz einen ersten Grenzwert Δṅ_{GE} erreicht bzw. überschreitet (bedingt durch das entsprechende Anlegen der Reibelemente der Kupplung, hier der Kupplung K1) wird zu diesem Zeitpunkt dann der zuletzt ermittelte Mittelwert ṅ_{initialMittel} der initialen Drehzahlgradienten ṅᵢₙᵢₜᵢₐₗ eingefroren bzw. gespeichert. Dieser zuletzt berechnete bzw. abgespeicherte Mittelwert ṅ_{initialMittel} wird, wie eingangs bereits beschrieben über eine bestimmte Zeit Δ_{tMittel} ermittelt bzw. berechnet und gespeichert, insbesondere unter Auslassung der initialen Drehzahlgradienten ṅᵢₙᵢₜᵢₐₗ, die in eine Totzeit Δtₜₒₜ (bzw. in ein Totzeit-Intervall) fallen. Bei der Berechnung dieses eingefrorenen/abgespeicherten Mittelwertes ṅ_{initialMittel} wird daher eine bestimmte Anzahl der zuletzt ermittelten initialen Drehzahlgradienten ṅᵢₙᵢₜᵢₐₗ bei Ermittlung dieses Mittelwerts n_{initialMittel} nicht berücksichtigt, insbesondere nämlich die innerhalb der bestimmten Totzeit Δtₜₒₜ ermittelten jeweiligen initialen Drehzahlgradienten ṅᵢₙᵢₜᵢₐₗ nicht berücksichtigt. Der zuletzt ermittelte Mittelwert ṅ_{initialMittel} beinhaltet daher aber auch die für die im System wirksamen Schleppmomente entsprechenden Werte. Die Kupplung, hier beispielhaft die Kupplung K1 wird entsprechend weiter eingerückt und dabei wird insbesondere kontinuierlich auch der sich verändernde Drehzahlgradient ṅ_{GE} der Getriebeeingangswelle 4 weiterhin ermittelt, wobei dann auch die Gradientendifferenz zwischen dem, insbesondere nun abgespeicherten Mittelwert ṅ_{initialMittel} und dem aktuell sich verändernden Drehzahlgradienten ṅ_{GE} kontinuierlich ermittelt wird. Erreicht der Wert für die Gradientendifferenz einen bestimmten zweiten Grenzwert Δṅ_{Detekt} bzw. überschreitet die Gradientendifferenz den zweiten Grenzwert Δṅ_{Detekt}, dann wird der zugehörige Einrückweg s der Kupplung, hier der Kupplung K1 gespeichert, insbesondere wird so dann der aktuelle Kisspoint S_{Kiss} bestimmt bzw. der alte Kisspoint S₀ entsprechend adaptiert, nämlich zum neuen Kisspoint S_{Kiss}. Durch das bekannte Massenträgheitsmoment J_{GE} der Getriebeeingangswelle 4 entspricht das Produkt hieraus mit der spezifischen Gradientendifferenz als Wert Δṅ_{Detekt} dem direkt wirksamen Kupplungsmoment M_{Kupp}, so dass gilt M_{Kupp} = J_{GE} x Δṅ_{Detekt}. Unter dem Massenträgheitsmoment J_{GE} der Getriebeeingangswelle ist nicht nur das Massenträgheitsmoment der Welle selbst und mit ihr drehfest verbundenen Teilen (Kupplungsscheibe bzw. Lamellen mit Lamellenträger, Synchrokörper,...) zu verstehen, sondern auch auf die Achse der Getriebeeingangswelle bezogene Massenträgheitsmomente der zwingend mitdrehenden Wellen bzw. Teilen die auf anderen Wellen angeordnet sind, z. B. Rückwärtsgangwelle, mit den Festräder der Getriebeeingangswelle kämmende Losräder insbesondere wenn eine Synchronisiervorrichtung nicht auf der Getriebeeingangswelle angeordnet ist usw.

Bei bekanntem Massenträgheitsmoment J_{GE} der Getriebeeingangswelle 4 ergibt sich das wirksame Kupplungsmoment M_{Kupp} der ersten Kupplung K1 zum Zeitpunkt des neuen bzw. adaptierten Kisspointes S_{Kiss} aus dem Produkt des Massenträgheitsmomentes J_{GE} und dem zweiten Grenzwert Δṅ_{Detekt} bzw. dieser spezifischen Gradientendifferenz. Es kann ein für den Kisspoint wirksames bestimmtes Kupplungsmoment M_{Kupp} gewählt werden, aus dem und dem bekannten Massenträgheitsmoment J_{GE} der Getriebeeingangswelle 4 sich der zweite Grenzwert Δṅ_{Detekt} bzw. dieser spezifischen Gradientendifferenz ergibt. Abhängig davon wird der Kisspoint bestimmt. Nach der Adaption des Kisspoint bzw. nach der Ermittlung des neuen Kisspoints S_{Kiss} wird die Kupplung, hier die Kupplung K1 wieder vollständig geöffnet, wobei die Adaption des Kisspoints hier insbesondere während des Fahrbetriebs des Kraftfahrzeuges realisiert wird und dann der weitere Fahrbetrieb mit dem adaptierten Kisspoint S_{Kiss} bzw. dem nun neuen Einrückweg s der Kupplung, hier der Kupplung K1 betrieben wird.

Das zuvor beschriebene Verfahren ist anhand der Fig. 1 bis 5 zur Adaption des Kisspoints der Kupplung, hier der ersten Kupplung K1 oben beschrieben worden, dies kann natürlich analog auch für die andere, zweite Kupplung K2 erfolgen, wobei hier dann die Drehzahlen und Drehzahlgradienten der zweiten Getriebeeingangswelle 5 ermittelt bzw. die oben beschriebenen Werte entsprechend korrespondierend berechnet werden.

### Bezugszeichenliste

- 1: Doppelkupplung
- 2: Doppelkupplungsgetriebe
- 3: Kraftfahrzeug
- 4: erste Getriebeeingangswelle
- 5: zweite Getriebeeingangswelle
- 6: erste Vorlegewelle
- 7: zweite Vorlegewelle
- 8: dritte Vorlegewelle
- 9: Abtriebswelle
- 10: Motorwelle

- K1: erste Kupplung
- K2: zweite Kupplung
- I bis VII: Gänge 1 bis 7 bzw. erste bis siebte Gangstufe
- R: Rückwärtsgang
- n: Drehzahl
- t: Zeit

- n_{M}: Motordrehzahl
- n_{sync1}: Synchrondrehzahl
- n_{sync2}: Synchrondrehzahl
- n_{GE}: Drehzahl Getriebeeingangswelle
- P₀: erste Phase
- s: Einrückweg
- s₁: Einrückabstand
- S₀: zuletzt bekannter Kisspoint
- S_{Kiss}: neuer, adaptierter Kisspoint
- ṅ_{M}: Motor-Drehzahlgradient
- n_{sync1/2}: Synchron-Drehzahlgradient
- ṅ_{GE}: Drehzahlgradient der freien Getriebeeingangswelle
- ṅᵢₙᵢₜᵢₐₗ: initialer Drehzahlgradient der freien Getriebeeingangswelle
- ṅ_{initalMittel}: Mittelwert bestimmter initialer Drehzahlgradienten
- Δṅ_{GE}: erster Grenzwert der Gradientendifferenz
- Δṅ_{Detekt}: zweiter Grenzwert der Gradientendifferenz
- Δt_{Mittel}: Zeitspanne/Zeitintervall
- Atₜₒₜ: Zeitspanne/Zeitintervall
- M_{Kupp}: wirksames Kupplungsmoment
- J_{GE}: Massenträgheitsmoment der freien Getriebeeingangswelle

## Patentansprüche

1. Verfahren zur Adaption des Kisspoints (S₀) zumindest einer der Kupplungen (K1 bzw. K2) einer Doppelkupplung (1) eines Doppelkupplungsgetriebes (2) eines Kraftfahrzeuges (3), insbesondere der Doppelkupplung (1) eines automatisierten Doppelkupplungsgetriebes (2), wobei der Kisspoint (S₀) der Kupplung (K1 bzw. K2) adaptiert wird, die der Getriebeeingangswelle (4 bzw. 5) des freien Teilgetriebes des Doppelkupplungsgetriebes (2) zugeordnet ist, wobei die Motordrehzahlen (n_{M}) ermittelt und die Synchrondrehzahlen (n_{sync1/2}) der dem freien Teilgetriebe zugeordneten Getriebeeingangswelle (4 bzw. 5) bekannt sind bzw. ermittelt werden, wobei die Drehzahlen (n_{GE}) der dem freien Teilgetriebe zugeordneten Getriebeeingangswelle (4 bzw. 5) erfasst werden, wobei die zu adaptierende und dem freien Teilgetriebe zugeordnete Kupplung (K1 bzw. K2) zunächst vollständig geöffnet wird, wobei die dem freien Teilgetriebe zugeordneten Gänge (I, III, V, VII bzw. II, IV, VI) und/oder die dem freien Teilgetriebe zugeordneten Synchronisiervorrichtungen ausgelegt bzw. geöffnet werden und wobei danach zunächst eine Ermittlung und/oder Bewertung der auf die Getriebeeingangswelle (4 bzw. 5) möglicherweise beschleunigend oder verzögernd einwirkenden Schleppmomente erfolgt, nämlich wobei die relative Lage der Drehzahl (n_{GE}) der Getriebeeingangswelle (4 bzw. 5) zur Motordrehzahl (n_{M}) und/oder zur Synchrondrehzahl (n_{sync1/2}) erfasst und/oder ermittelt wird, wobei bei der Ermittlung bzw. beim Vorliegen eines Synchronschleppmomentes und/oder eines Kupplungsschleppmoment vor dem Beginn des Adaptionsvorganges die Drehzahl (n_{GE}) der Getriebeeingangswelle (4 bzw. 5) gezielt so positioniert wird, damit das jeweilige anliegende Schleppmoment bei der Adaption des Kisspoints entsprechend berücksichtigt wird, wobei in einer ersten Phase (Po), wenn die Kupplung (K1 bzw. K2) vollständig geöffnet ist, zur Ermittlung und/oder Bewertung eines möglicherweise existierenden Kupplungsschleppmomentes der Drehzahlgradient (ṅ_{GE}) der Getriebeeingangswelle (4 bzw. 5) verglichen wird mit dem Motor-Drehzahlgradient (n_{M}) der Motorwelle (10) und/oder zur Ermittlung und/oder Bewertung eines möglicherweise existierenden Synchronschleppmomentes der Drehzahlgradient (ṅ_{GE}) der Getriebeeingangswelle (4 bzw. 5) verglichen wird mit dem Synchron-Drehzahlgradienten (ṅ_{sync1/2}) und wobei die Differenz (Δn_{M-GE}) zwischen der Motordrehzahl (n_{M}) und der Drehzahl (n_{GE}) der Getriebeeingangswelle (4 bzw. 5) erfasst wird und wobei der Adaptionsvorgang erst beginnt, wenn diese Differenz (Δn_{M-GE}) einen bestimmten Grenzwert überschreitet.

2. Verfahren nach Anspruch 1, **dadurch gekennzeichnet, dass** der Drehzahlgradient (n_{GE}) der Getriebeeingangswelle (4 bzw. 5), der Motor-Drehzahlgradient (n_{M}) der Motorwelle (10) und der Synchron-Drehzahlgradient (ṅ_{sync1/2}) mindestens einer dem freien Teilgetriebe zugeordneten und geöffneten Synchronisiervorrichtung ermittelt und/oder erfasst wird.

3. Verfahren nach einem der vorstehenden Ansprüche, **dadurch gekennzeichnet, dass** das jeweilige anliegende Schleppmoment bei der Adaption des Kisspoints mit Hilfe der Betrachtung des sich einstellenden Drehzahlgradienten (ṅ_{GE}) der Getriebeeingangswelle (4 bzw. 5) entsprechend berücksichtigt wird.

4. Verfahren nach einem der Ansprüche 1 bis 3, **dadurch gekennzeichnet, dass**, wenn ein Synchronschleppmoment ermittelt wird, dann die Kupplung (K1 bzw. K2) kurzzeitig wenigstens teilweise geschlossen wird, damit die Drehzahl (n_{GE}) der Getriebeeingangswelle (4 bzw. 5) von der Synchrondrehzahl (n_{sync1} bzw. n_{sync2}) so weggeführt wird, insbesondere dann, wenn das verbleibende Zeitintervall zum Einrücken der zu adaptierenden Kupplung (K1 bzw. K2) nicht ausreichend groß ist, vorzugsweise wenn das verbleibende Zeitintervall länger als eine berechnete Zeitperiode ist, nach der die Drehzahl (n_{GE}) der Getriebeeingangswelle (4 bzw. 5) die Synchrondrehzahl (n_{sync1} bzw. n_{sync2}) erreichen wird.

5. Verfahren nach einem der Ansprüche 1 bis 3, **dadurch gekennzeichnet, dass**, wenn ein Kupplungsschleppmoment ermittelt wird, dann ein Gang (I, III, V, VII bzw. II, IV, VI) im freien Teilgetriebe zumindest teilweise eingelegt und/oder ansynchronisiert wird, damit die Drehzahl (n_{GE}) der Getriebeeingangswelle (4 bzw. 5) von der Motordrehzahl (n_{M}) so weggeführt wird.

6. Verfahren nach einem der vorstehenden Ansprüche, **dadurch gekennzeichnet, dass**, insbesondere nach der ersten Phase (P₀) und bei Beginn des Adaptionsvorganges, insbesondere nämlich wenn die Kupplung (K1 bzw. K2) zur Adaption des Kisspoints beginnt einzurücken, die initialen Drehzahlgradienten (ṅᵢₙᵢₜᵢₐₗ) der Getriebeeingangswelle (4 bzw. 5) insbesondere kontinuierlich zyklisch ermittelt und/oder berechnet werden, wobei insbesondere bezogen auf einen festen Takt eine bestimmte Anzahl der Werte der initialen Drehzahlgradienten (ṅᵢₙᵢₜᵢₐₗ), insbesondere in einem Ringpuffer gespeichert werden.

7. Verfahren nach einem der vorstehenden Ansprüche, **dadurch gekennzeichnet, dass** die Kupplung (K1 bzw. K2), insbesondere rampenförmig eingerückt wird, wobei die Rampenschrittweite vor dem Erreichen des zuletzt bekannten Kisspoints (S₀) zur Erhöhung der Detektionsgenauigkeit verringert wird, wenn ein bestimmter Einrückabstand (Si) zum zuletzt bekannten Kisspoint (S0) unterschritten wird.

8. Verfahren nach einem der vorstehenden Ansprüche, **dadurch gekennzeichnet, dass** insbesondere aus den im Ringpuffer abgespeicherten bestimmten initialen Drehzahlgradienten (ṅᵢₙᵢₜᵢₐₗ) insbesondere kontinuierlich ein Mittelwert (ṅ_{initialMittel}) ermittelt bzw. berechnet und/oder gespeichert wird, wobei eine bestimmte Anzahl der zuletzt ermittelten initialen Drehzahlgradienten (ṅᵢₙᵢₜᵢₐₗ) bei der Ermittlung des Mittelwertes (ṅ_{initialMittel}) unberücksichtigt bleibt, insbesondere nämlich die innerhalb einer bestimmten Totzeit (Δtot) ermittelten initialen Drehzahlgradienten (ṅᵢₙᵢₜᵢₐₗ) unberücksichtigt bleiben.

9. Verfahren nach einem der vorstehenden Ansprüche, **dadurch gekennzeichnet, dass** insbesondere bei teils eingerückter Kupplung (K1 bzw. K2) - eine Gradientendifferenz zwischen dem Drehzahlgradienten (ṅ_{GE}) der Getriebeeingangswelle (4 bzw. 5) und einem Mittelwert (ṅ_{initialMittel}) der initialen Drehzahlgradienten (ṅᵢₙᵢₜᵢₐₗ) insbesondere kontinuierlich berechnet bzw. ermittelt wird.

10. Verfahren nach einem der vorstehenden Ansprüche, **dadurch gekennzeichnet, dass**, wenn die Gradientendifferenz einen bestimmten ersten Grenzwert/Schwellwert (Δṅ_{GE}) erreicht bzw. überschreitet, dann der zu diesem Zeitpunkt zuletzt ermittelte Mittelwert (ṅ_{initialMittel}) "eingefroren" bzw. abgespeichert wird.

11. Verfahren nach Anspruch 10, **dadurch gekennzeichnet, dass**, insbesondere wenn die Kupplung (K1 bzw. K2) entsprechend weiter eingerückt wird, die Gradientendifferenz zwischen dem sich verändernden Drehzahlgradienten (ṅ_{GE}) der Getriebeeingangswelle (4 bzw. 5) und dem "eingefrorenen" bzw. abgespeicherten Mittelwert (ṅ_{initialMittel}) einen bestimmten zweiten Grenzwert/Schwellwert (Δṅ_{Detekt}) erreicht bzw. überschreitet hierauf basierend der neue Kisspoint (S_{Kiss}) bestimmt bzw. adaptiert wird, insbesondere dann der entsprechend zugehörige Einrückweg (s) der Kupplung (K1 bzw. K2) gespeichert wird.

12. Verfahren nach einem der vorstehenden Ansprüche, **dadurch gekennzeichnet, dass** ein Massenträgheitsmoment (J_{GE}) der Getriebeeingangswelle (4 bzw. 5) bekannt ist, dass ein wirksames Kupplungsmoment (M_{Kupp}) zum Zeitpunkt des Kisspoints (S_{Kiss}) bestimmt wird, und daraus die dem bestimmten wirksamen Kupplungsmoment (M_{Kupp}) zum Zeitpunkt des Kisspoints (S_{Kiss}) entsprechende spezifische Gradientendifferenz, bzw. der zweite Grenzwert/Schwellwert (Δṅ_{Detekt}) berechnet wird.

13. Verfahren nach einem der vorstehenden Ansprüche, **dadurch gekennzeichnet, dass** nach der Adaption des Kisspoints die Kupplung (K1 bzw. K2) wieder vollständig geöffnet wird, wobei die Adaption des Kisspoints insbesondere während des Fahrbetriebs des Kraftfahrzeuges realisiert wird.

## Claims

1. Method for the adaptation of the kiss point (S₀) of at least one of the clutches (K1 or K2) of a double clutch (1) of a double clutch transmission (2) of a motor vehicle (3), in particular of the double clutch (1) of an automated double clutch transmission (2), the kiss point (S₀) being adapted of that clutch (K1 or K2) which is assigned to the transmission input shaft (4 or 5) of the free sub-transmission of the double clutch transmission (2), the engine rotational speeds (n_{M}) being determined, and the synchronous rotational speeds (n_{sync1/2}) of the transmission input shaft (4 or 5) which is assigned to the free sub-transmission being known or being determined, the rotational speeds (n_{GE}) of the transmission input shaft (4 or 5) which is assigned to the free sub-transmission being detected, the clutch (K1 or K2) which is to be adapted and is assigned to the free sub-transmission first of all being opened completely, the gears (I, III, V, VII or II, IV, VI) which are assigned to the free sub-transmission and/or the synchronizing apparatuses which are assigned to the free sub-transmission being disengaged or opened, and, afterwards, a determination and/or evaluation of the drag torques which possibly act on the transmission input shaft (4 or 5) in an accelerating or retarding manner, the relative position of the rotational speed (n_{GE}) of the transmission input shaft (4 or 5) with respect to the engine rotational speed (n_{M}) and/or with respect to the synchronous rotational speed (n_{sync1/2}) namely being detected and/or determined, the rotational speed (n_{GE}) of the transmission input shaft (4 or 5) being positioned in a targeted manner in the case of the determination or in the case of the presence of a synchronous drag torque and/or a clutch drag torque before the beginning of the adaptation operation, such that the respective prevailing drag torque is taken into consideration correspondingly in the case of the adaptation of the kiss point, the rotational speed gradient (*ṅ*_{GE}) of the transmission input shaft (4 or 5) being compared with the engine rotational speed gradient (*ṅ*_{M}) of the engine shaft (10) for the determination and/or evaluation of a possibly existing clutch drag torque in a first phase (P₀) when the clutch (K1 or K2) is completely open, and/or the rotational speed gradient (*ṅ*_{GE}) of the transmission input shaft (4 or 5) being compared with the synchronous rotational speed gradient (ṅ_{sync1/2}) for the determination and/or evaluation of a possibly existing synchronous drag torque, and the difference (Δn_{M-GE}) between the engine rotational speed (n_{M}) and the rotational speed (n_{GE}) of the transmission input shaft (4 or 5) being detected, and the adaptation operation beginning only when the said difference (Δn_{M-GE}) exceeds a defined limit value.

2. Method according to Claim 1, **characterized in that** the rotational speed gradient (*ṅ*_{GE}) of the transmission input shaft (4 or 5), the engine rotational speed gradient (*ṅ*_{M}) of the engine shaft (10) and the synchronous rotational speed gradient (ṅ_{sync1/2}) of at least one synchronizing apparatus which is open and is assigned to the free sub-transmission are determined and/or detected.

3. Method according to either of the preceding claims, **characterized in that** the respective prevailing drag torque is taken into consideration considerably in the case of the adaptation of the kiss point with the aid of the consideration of that rotational speed gradient (*ṅ*_{GE}) of the transmission input shaft (4 or 5) which is set.

4. Method according to one of Claims 1 to 3, **characterized in that**, when a synchronizing drag torque is determined, the clutch (K1 or K2) is briefly closed at least partially, in order that the rotational speed (n_{GE}) of the transmission input shaft (4 or 5) is thus moved away from the synchronous rotational speed (n_{sync1} or n_{sync2}), in particular when the remaining time interval is not sufficiently great for the engagement of the clutch (K1 or K2) to be adapted, preferably when the remaining time interval is longer than a calculated time period, after which the rotational speed (n_{GE}) of the transmission input shaft (4 or 5) will reach the synchronous rotational speed (n_{sync1} or n_{sync2}) .

5. Method according to one of Claims 1 to 3, **characterized in that**, when a clutch drag torque is determined, a gear (I, III, V, VII or II, IV, VI) is engaged at least partially and/or is initially synchronized in the free sub-transmission, in order that the rotational speed (n_{GE}) of the transmission input shaft (4 or 5) is thus moved away from the engine rotational speed (n_{M}) .

6. Method according to one of the preceding claims, **characterized in that**, in particular after the first phase (P₀) and in the case of the beginning of the adaptation operation, in particular namely when the clutch (K1 or K2) begins to engage for the adaptation of the kiss point, the initial rotational speed gradients (*ṅ*ᵢₙᵢₜᵢₐₗ) of the transmission input shaft (4 or 5) are determined and/or calculated, in particular, in a continuously cyclical manner, a defined number of the values of the initial rotational speed gradients (*ṅ*ᵢₙᵢₜᵢₐₗ) being stored, in particular, in a ring buffer, in particular in relation to a fixed cycle.

7. Method according to one of the preceding claims, **characterized in that** the clutch (K1 or K2) is engaged, in particular, in a ramp-shaped manner, the ramp step size being decreased in order to increase the detection accuracy before the last known kiss point (S₀) is reached, when a defined engagement spacing (Si) from the last known kiss point (S₀) is undershot.

8. Method according to one of the preceding claims, **characterized in that** a mean value (*ṅ*_{initialMittel}) is determined or calculated and/or stored, in particular continuously, in particular from the defined initial rotational speed gradients (*ṅ*ᵢₙᵢₜᵢₐₗ) which are stored in the ring buffer, a defined number of the last determined initial rotational speed gradients (*ṅ*ᵢₙᵢₜᵢₐₗ) remaining unconsidered in the case of the determination of the mean value (*ṅ*_{initialMittel}), the initial rotational speed gradients (*ṅ*ᵢₙᵢₜᵢₐₗ) which are determined within a defined dead time (Δtot) namely remaining unconsidered, in particular.

9. Method according to one of the preceding claims, **characterized in that**, in particular in the case of a partially engaged clutch (K1 or K2), a gradient difference between the rotational speed gradient (*ṅ*_{GE}) of the transmission input shaft (4 or 5) and a mean value (*ṅ*_{initialMittel}) of the initial rotational speed gradients (*ṅ*ᵢₙᵢₜᵢₐₗ) being calculated or determined, in particular continuously.

10. Method according to one of the preceding claims, **characterized in that**, when the gradient difference reaches or exceeds a defined first limit value/threshold value (Δ*ṅ*_{GE}), the last determined mean value (*ṅ*_{initialMittel}) at this time is "frozen" or stored.

11. Method according to Claim 10, **characterized in that**, in particular when the clutch (K1 or K2) is correspondingly engaged further, the gradient difference between the changing rotational speed gradient (*ṅ*_{GE}) of the transmission input shaft (4 or 5) and the "frozen" or stored mean value (*ṅ*_{initialMittel}) reaches or exceeds a defined second limit value/threshold value (Δ*ṅ*_{Detekt}) and, based on this, the new kiss point (S_{Kiss}) is defined or adapted, the correspondingly associated engagement travel (s) of the clutch (K1 or K2) is then stored, in particular.

12. Method according to one of the preceding claims, **characterized in that** a mass moment of inertia (J_{GE}) of the transmission input shaft (4 or 5) is known, **in that** an active clutch torque (M_{Kupp}) at the time of the kiss point (S_{Kiss}) is defined, and the second limit value/threshold value (Δ*ṅ*_{Detekt}) or the specific gradient difference which corresponds to the defined active clutch torque (M_{Kupp}) at the time of the kiss point (S_{Kiss}) is calculated therefrom.

13. Method according to one of the preceding claims, **characterized in that**, after the adaptation of the kiss point, the clutch (K1 or K2) is opened completely again, the adaptation of the kiss point being realized, in particular, during the driving operation of the motor vehicle.

## Revendications

1. Procédé d'adaptation du point de contact (S₀) d'au moins un des embrayages (K1 ou K2) d'un double embrayage (1) d'une transmission à double embrayage (2) d'un véhicule automobile (3), en particulier du double embrayage (1) d'une transmission à double embrayage automatique (2), le point de contact (S₀) étant adapté à l'embrayage (K1 ou K2) qui est associé à l'arbre d'entrée de transmission (4 ou 5) de la partie de transmission libre de la transmission à double embrayage (2), les vitesses de rotation (n_{M}) du moteur étant déterminées et les vitesses de rotation synchrones (n_{sync1/2}) de l'arbre d'entrée de transmission (4 ou 5) associé à la partie de transmission libre étant connues ou déterminées, les vitesses de rotation (n_{GE}) de l'arbre d'entrée de transmission (4 ou 5) associé à la partie de transmission libre étant acquises, l'embrayage (K1 ou K2) à adapter et à associer à la partie de transmission libre étant tout d'abord entièrement ouvert, les rapports (I, III, V, VII ou II, IV, VI) associés à la partie de transmission libre et/ou les dispositifs de synchronisation associés à la partie de transmission libre étant débrayés ou ouverts, et les couples de traînée qui peuvent avoir un effet d'accélération ou de décélération sur l'arbre d'entrée de transmission (4 ou 5) étant tout d'abord déterminés et/ou évalués, c'est-à-dire la position relative de la vitesse de rotation (n_{GE}) de l'arbre d'entrée de transmission (4 ou 5) par rapport à la vitesse de rotation (n_{M}) du moteur et/ou à la vitesse de rotation synchrone (n_{sync1/2}) étant acquise et/ou déterminée, la vitesse de rotation (n_{GE}) de l'arbre d'entrée de transmission (4 ou 5) étant spécifiquement positionnée lors de la détermination ou de la présence d'un couple de traînée synchrone et/ou d'un couple de traînée d'embrayage avant le début du processus d'adaptation de manière à prendre en compte de façon appropriée le couple de traînée respectif appliqué lors de l'adaptation du point de contact, dans une première phase (P₀), lorsque l'embrayage (K1 ou K2) est entièrement ouvert, pour déterminer et/ou évaluer un couple de traînée d'embrayage éventuellement existant, le gradient de vitesse de rotation (*ṅ_{GE}*) de l'arbre d'entrée de transmission (4 ou 5) étant comparé au gradient de vitesse de rotation de moteur (*ṅ_{M}*) de l'arbre de moteur (10) et/ou pour déterminer et/ou évaluer un couple de traînée synchrone éventuellement présent, le gradient de vitesse de rotation (*ṅ_{GE}*) de l'arbre d'entrée de transmission (4 ou 5) étant comparé au gradient de vitesse de rotation synchrone (ṅ_{sync1/2}) et la différence (Δn_{M-GE}) entre la vitesse de rotation (nM) du moteur et la vitesse de rotation (n_{GE}) de l'arbre d'entrée de transmission (4 ou 5) étant acquise et le processus d'adaptation ne commençant que lorsque cette différence (Δn_{M-GE}) devient supérieure à une valeur limite déterminée.

2. Procédé selon la revendication 1, **caractérisé en ce que** le gradient de vitesse de rotation (*ṅ_{GE}*) de l'arbre d'entrée de transmission (4 ou 5), le gradient de vitesse de rotation de moteur (*ṅ_{M}*) de l'arbre de moteur (10) et le gradient de vitesse de rotation synchrone (ṅ_{sync1/2}) au moins d'un dispositif de synchronisation ouvert et associé à la partie de transmission libre sont déterminés et/ou acquises.

3. Procédé selon l'une des revendications précédentes, **caractérisé en ce que** le couple de traînée respectif appliqué est pris en compte de manière appropriée lors de l'adaptation du point de contact par réglage du gradient de vitesse de rotation (*ṅ_{GE}*) de l'arbre d'entrée de transmission (4 ou 5).

4. Procédé selon l'une des revendications 1 à 3, **caractérisé en ce que,** si un couple de traînée synchrone est déterminé, alors l'embrayage (K1 ou K2) est brièvement fermé au moins partiellement de manière à ce que la vitesse de rotation (n_{GE}) de l'arbre d'entrée de transmission (4 ou 5) soit éloignée de la vitesse de rotation synchrone (n_{sync1} ou n_{sync2}), notamment seulement si l'intervalle de temps restant n'est pas suffisamment important pour engager l'embrayage (K1 ou K2) à adapter, de préférence seulement si l'intervalle de temps restant est plus long qu'un intervalle de temps calculée au bout duquel la vitesse de rotation (n_{GE}) de l'arbre d'entrée de transmission (4 ou 5) atteindra la vitesse de rotation synchrone (n_{sync1} ou n_{sync2}) .

5. Procédé selon l'une des revendications 1 à 3, **caractérisé en ce que** lorsqu'un couple de traînée d'embrayage est déterminé, alors un rapport (I, III, V, VII ou II, IV, VI) est au moins partiellement engagé et/ou synchronisé dans la partie de transmission libre de manière à ce que la vitesse de rotation (n_{GE}) de l'arbre d'entrée de transmission (4 ou 5) soit éloignée de la vitesse de rotation (n_{M}) du moteur.

6. Procédé selon l'une des revendications précédentes, **caractérisé en ce que,** notamment après la première phase (P₀) et au début du processus d'adaptation, notamment lorsque l'embrayage (K1 ou K2) commence à s'engager pour adapter le point de contact, les gradients de vitesse de rotation initiaux (*ṅ*ᵢₙᵢₜᵢₐₗ) de l'arbre d'entrée de transmission (4 ou 5) sont déterminées et/ou calculé de manière cyclique notamment en continu, un nombre déterminé de valeurs des gradients de vitesse de rotation initiaux (*ṅ*_{*initial*)} étant mémorisé notamment dans une mémoire tampon en anneau notamment par rapport à un cycle fixe.

7. Procédé selon l'une des revendications précédentes, **caractérisé en ce que** l'embrayage (K1 ou K2) est engagé notamment sous la forme d'une rampe, la largeur du pas de rampe étant réduite avant que le dernier point de contact connu (S₀) ne soit atteinte afin d'augmenter la précision de détection si une distance d'engagement déterminée (Si) jusqu'au dernier point de contact connu (S0) n'est pas atteinte.

8. Procédé selon l'une des revendications précédentes, **caractérisé en ce que** une valeur moyenne (*ṅ_{initialmoyen}*) est déterminée ou calculée et/ou mémorisée notamment à partir des gradients de vitesse de rotation initiaux (*ṅ*ᵢₙᵢₜᵢₐₗ₎ mémorisés dans la mémoire tampon en anneau, notamment en continu, un nombre déterminé de gradients de vitesse de rotation initiaux (*ṅ*ᵢₙᵢₜᵢₐₗ) déterminés en dernier n'étant pas pris en compte lors de la détermination de la valeur moyenne (*ṅ_{initialmoyen}*), en particulier les gradients de vitesse de rotation initiaux (*ṅ*ᵢₙᵢₜᵢₐₗ) déterminés dans un temps mort (Δmort) déterminé.

9. Procédé selon l'une des revendications précédentes, **caractérisé en ce que,** notamment dans le cas d'un embrayage (K1 ou K2) partiellement engagé, une différence de gradient entre le gradient de vitesse de rotation (*ṅ_{GE}*) de l'arbre d'entrée de transmission (4 ou 5) et une valeur moyenne (*ṅ_{initiaimoyen}*) des gradients de vitesse de rotation initiaux (*ṅ*ᵢₙᵢₜᵢₐₗ) est calculée ou déterminée notamment en continu.

10. Procédé selon l'une des revendications précédentes, **caractérisé en ce que,** lorsque la différence de gradient atteint ou dépasse une première valeur limite/valeur seuil (Δ*ṅ_{GE}*) déterminée, alors la valeur moyenne (*ṅ_{initialmoyen}*) déterminée en dernier à cet instant est « figée » ou mémorisée.

11. Procédé selon la revendication 10, **caractérisé en ce que,** notamment lorsque l'embrayage (K1 ou K2) est encore engagé de manière appropriée, la différence de gradient entre le gradient de vitesse initial variable (*ṅ_{GE}*) de l'arbre d'entrée de transmission (4 ou 5) et la valeur moyenne (*ṅ_{initialmoyen}*) « gelée » ou mémorisée atteint ou dépasse une deuxième valeur limite/valeur seuil (Δ*ṅ_{détect}*) déterminée et le nouveau point de contact (S_{Contact}) est déterminé ou adapté sur cette base, en particulier la course d'engagement (s) associée de manière appropriée de l'embrayage (K1 ou K2) est mémorisée.

12. Procédé selon l'une des revendications précédentes, **caractérisé en ce que** un moment d'inertie de masse (J_{GE}) de l'arbre d'entrée de transmission (4 ou 5) est connu, un couple d'embrayage effectif (M_{Embr}) est déterminé à l'instant du point de contact (S_{Contact}) , et la différence de gradient spécifique correspondant au couple d'embrayage effectif (M_{Embr}) déterminé à l'instant du point de contact (S_{Contact}) ou la deuxième valeur limite/valeur seuil (Δ*ṅ_{détect}*) est calculée à partir là.

13. Procédé selon l'une des revendications précédentes, **caractérisé en ce que,** après l'adaptation du point de contact, l'embrayage (K1 ou K2) est à nouveau entièrement ouvert, l'adaptation du point de contact étant effectuée notamment pendant que le véhicule est en mouvement.
